# EUROPEAN PATENT SPECIFICATION

(11) **EP 4 233 337 B1**
(45) Date of publication and mention of the grant of the patent: **07.05.2025**
(21) Application number: 21897234.7
(22) Date of filing: 30.11.2021
(51) Int. Cl.: H04W 74/00, H04L 5/00, H04L 27/26, H04W 74/0816, H04W 84/12

(54) **ACCESS POINT, STATION, AND WIRELESS COMMUNICATION METHOD**
ZUGANGSPUNKT, STATION UND DRAHTLOSKOMMUNIKATIONSVERFAHREN
POINT D'ACCÈS, STATION, ET PROCÉDÉ DE COMMUNICATION SANS FIL

(30) Priority: 30.11.2020 WO PCT/CN2020/132724; 08.04.2021 SG 10202103621T
(43) Date of publication of application: 30.08.2023
(60) Divisional application: 25166490.0
(73) Proprietor: GUANGDONG OPPO MOBILE TELECOMMUNICATIONS CORP., LTD., Dongguan, Guangdong 523860 (CN)
(72) Inventor: HUANG, Lei, 049483 Singapore (SG)
(74) Representative: Taor, Simon Edward William
(86) International application number: PCT/CN2021/134531
(87) International publication number: WO 2022/111734

(56) References cited:
- EP-A1- 4 228 370
- CN-A- 108 476 530
- US-A1- 2018 020 460
- US-A1- 2018 092 127
- US-A1- 2020 037 342
- US-A1- 2020 288 439
- YONGHO SEOK (MEDIATEK): "EHT RTS and CTS procedure", vol. 802.11 EHT; 802.11be, no. 2, 19 March 2020 (2020-03-19), pages 1 - 17, XP068167167, Retrieved from the Internet <URL:https://mentor.ieee.org/802.11/dcn/19/11-19-2125-02-00be-eht-rts-and-cts-procedure.pptx> [retrieved on 20200319]
- PO-KAI HUANG (INTEL): "CR for MU-RTS/CTS", vol. 802.11ax, no. 1, 13 March 2019 (2019-03-13), pages 1 - 8, XP068159855, Retrieved from the Internet <URL:https://mentor.ieee.org/802.11/dcn/19/11-19-0492-01-00ax-cr-for-mu-rts-cts.docx> [retrieved on 20190313]
- EDWARD AU (HUAWEI): "Specification Framework for TGbe", vol. 802.11 EHT; 802.11be, no. 20, 10 November 2020 (2020-11-10), pages 1 - 88, XP068175081, Retrieved from the Internet <URL:https://mentor.ieee.org/802.11/dcn/19/11-19-1262-20-00be-specification-framework-for-tgbe.docx> [retrieved on 20201110]

## Description

### BACKGROUND OF DISCLOSURE

### 1. Field of the Disclosure

The present disclosure relates to the field of communication systems, and more particularly, to an access point (AP), a station (STA), and a wireless communication method, which can provide a good communication performance and/or provide high reliability.

### 2. Description of the Related Art

Communication systems such as wireless communication systems are widely deployed to provide various types of communication content such as voice, video, packet data, messaging, broadcast, and so on. These communication systems may be multiple-access systems capable of supporting communication with multiple users by sharing available system resources (such as, time, frequency, and power). A wireless network, for example a wireless local area network (WLAN), such as a Wi-Fi (institute of electrical and electronics engineers (IEEE) 802.11) network may include an access point (AP) that may communicate with one or more stations (STAs) or mobile devices. The WLAN enables a user to wirelessly access an internet based on radio frequency technology in a home, an office, or a specific service area using a portable terminal such as a personal digital assistant (PDA), a laptop computer, a portable multimedia player (PMP), a smartphone, etc. The AP may be coupled to a network, such as the internet, and may enable a mobile device to communicate via the network (or communicate with other devices coupled to the AP). A wireless device may communicate with a network device bidirectionally. For example, in a WLAN, a STA may communicate with an associated AP via downlink and uplink. The downlink may refer to a communication link from the AP to the STA, and the uplink may refer to a communication link from the STA to the AP.

In recent times, to support increased numbers of devices supporting WLAN, such as smartphones, more APs have been deployed. Despite increase in use of WLAN devices supporting the IEEE 802.11ax high efficiency (HE) WLAN standard, that provide high performance relative to WLAN devices supporting the legacy IEEE 802.11g/n/ac standard, a WLAN system supporting higher performance is required due to WLAN users' increased use of high volume content such as a ultra-high definition video. Although a conventional WLAN system has aimed at increase of bandwidth and improvement of a peak transmission rate, actual users thereof could not feel drastic increase of such performance.

IEEE 802.11ax HE WLAN supports a bandwidth (BW) up to 160 MHz and supports preamble puncturing for orthogonal frequency division multiple access (OFDMA) transmission. In order to achieve significant throughput improvement over IEEE 802.11ax HE WLAN, IEEE 802.11be extremely high throughput (EHT) WLAN extends maximum BW support from 160 MHz to 320 MHz and extends preamble puncturing support from OFDMA transmission only to both OFDMA transmission and non-OFDMA transmission. In addition, it is expected that HE STAs will exist with EHT STAs in a same EHT basic service set (BSS).

In IEEE 802.11ax HE WLAN, a multi-user ready-to-send (MU-RTS) trigger/clear-to-send (CTS) frame exchange procedure allows an AP to initiate a transmit opportunity (TXOP) and protect TXOP frame exchanges. However, it is unclear how to utilize the MU-RTS trigger/CTS frame exchange procedure for TXOP protection in IEEE 802.11be EHT WLAN in an efficient manner.

Therefore, there is a need for an access point (AP), a station (STA), and a wireless communication method, which can solve issues in the prior art, improve transmit opportunity (TXOP) protection, provide a MU-RTS trigger/CTS frame exchange procedure for TXOP protection in an efficient manner, achieve extremely high throughput, provide good communication performance, and/or provide high reliability.
EP4228370A1, which is published after the filing date and claims the priority date of 08.10.2020, relates to a method to enable a wireless access point to efficiently perform an operation of transmitting or receiving a frame requiring low latency time.
US2018/092127A1 relates to a method and device for transmitting a physical layer protocol data unit (PPDU) in a transmission opportunity (TXOP).
YONGHO SEOK (MEDIATEK): "EHT RTS and CTS procedure", IEEE DRAFT, 11-19-2125-02-00BE-EHT-RTS-AND-CTS-PROCEDURE, IEEE-SA MENTOR, PISCATAWAY, NJ USA, vol. 802.11 EHT; 802.11be, no. 2 19 March 2020 (2020-03-19) discusses EHT RTS and CTS procedure.
PO-KAI HUANG (INTEL): "CR for MU-RTS/CTS", IEEE DRAFT; 11-19-0492-01-00AX-CR-FOR-MU-RTS-CTS, IEEE-SA MENTOR PISCATAWAY, NJ USA, vol. 802.11ax, no. 1 13 March 2019 (2019-03-13) relates to 11ax D4.0 MAC comment resolution for MU-RTS/CTS.

### SUMMARY

An object of the present disclosure is to propose an access point (AP), and a wireless communication method, which can solve issues in the prior art, improve transmit opportunity (TXOP) protection, provide a MU-RTS trigger/CTS frame exchange procedure for TXOP protection in an efficient manner, achieve extremely high throughput, provide good communication performance, and/or provide high reliability.

In a first aspect of the present disclosure, a wireless communication method is set out in claim 1. Additional features are set out in claims 2 to 14.

In an aspect of the present disclosure, an access point (AP) is provided as set out in claim 15.

### BRIEF DESCRIPTION OF DRAWINGS

In order to illustrate the embodiments of the present disclosure or related art more clearly, the following figures will be described.
FIG. 1 is a schematic diagram illustrating an example of a wireless communications system according to the present disclosure.
FIG. 2 is a schematic diagram illustrating an example of a wireless communications system according the present disclosure.
FIG. 3 is a schematic diagram illustrating an example of a wireless communications system according the present disclosure.
FIG. 4 is a block diagram of one or more stations (STAs) and an access point (AP) of communication in a wireless communications system according to the present disclosure
FIG. 5 is a flowchart illustrating a wireless communication method performed by an AP according to an embodiment of the present disclosure.
FIG. 6 is a flowchart illustrating a wireless communication method performed by a STA according to the present disclosure.
FIG. 7 is a schematic diagram illustrating an example of multi-user ready-to-send (MU-RTS)/clear-to-send (CTS)/downlink (DL) extremely high throughput (EHT) MU physical layer (PHY) protocol data unit (PPDU)/acknowledgment responses according to the present disclosure
FIG. 8A is a schematic diagram illustrating a trigger frame format according to the present disclosure.
FIG. 8B is a schematic diagram illustrating a format of a common information field of a MU-RTS trigger frame according to the present disclosure
FIG. 8C is a schematic diagram illustrating a format of a user information field of a MU-RTS trigger frame according to the present disclosure.
FIG. 9 is a schematic diagram illustrating settings for a resource unit (RU) allocation subfield and a lower/upper 160 MHz segment subfield in a MU-RTS trigger frame according to an embodiment of the present disclosure.
FIG. 10 is a schematic diagram illustrating an example of a MU-RTS trigger frame soliciting CTS frame responses on P80 according to the present disclosure
FIG. 11 is a schematic diagram illustrating four allowed 484+242 tone MRUs in non-OFDMA 80 MHz EHT PPDU according to the present disclosure
FIG. 12 is a schematic diagram illustrating four allowed 996+484 tone MRUs in non-OFDMA 160 MHz EHT PPDU according to an embodiment of the present disclosure.
FIG. 13 is a schematic diagram illustrating eight allowed 996+484+242 tone MRUs in non-OFDMA 160 MHz EHT PPDU according to the present disclosure
FIG. 14 is a schematic diagram illustrating twelve allowed 2x996+484 tone MRUs in non-OFDMA 320 MHz EHT PPDU according to the present disclosure.
FIG. 15 is a schematic diagram illustrating four allowed 3x996 tone MRUs in non-OFDMA 320 MHz EHT PPDU according to the present disclosure
FIG. 16 is a schematic diagram illustrating eight allowed 3x996+484 tone MRUs in non-OFDMA 320 MHz EHT PPDU according to the present disclosure
FIG. 17 is a schematic diagram illustrating settings for an RU allocation subfield and a lower/upper 160 MHz segment subfield in a MU-RTS trigger frame for indicating one 484+242 tone multiple resource unit (MRU) according to an embodiment of the present disclosure.
FIG. 18 is a schematic diagram illustrating settings for an RU allocation subfield and a lower/upper 160 MHz segment subfield in a MU-RTS trigger frame for indicating one 996+484 tone MRU according to an embodiment of the present disclosure.
FIG. 19 is a schematic diagram illustrating settings for an RU allocation subfield and a lower/upper 160 MHz segment subfield in a MU-RTS trigger frame for indicating one 996+484+242 tone MRU according to an embodiment of the present disclosure.
FIG. 20 is a schematic diagram illustrating settings for an RU allocation subfield and a lower/upper 160 MHz segment subfield in a MU-RTS trigger frame for indicating one 2x996+484 tone MRU according to an embodiment of the present disclosure.
FIG. 21 is a schematic diagram illustrating settings for an RU allocation subfield and a lower/upper 160 MHz segment subfield in a MU-RTS trigger frame for indicating one 3x996 tone MRU according to an embodiment of the present disclosure.
FIG. 22 is a schematic diagram illustrating settings for an RU allocation subfield and a lower/upper 160 MHz segment subfield in a MU-RTS trigger frame for indicating one 3x996+484 tone MRU according to an embodiment of the present disclosure.
FIG. 23 is a schematic diagram illustrating another example of a MU-RTS trigger frame soliciting CTS frame responses on P80 according to an embodiment of the present disclosure.
FIG. 24 is a block diagram of a system for wireless communication according to the present disclosure.
FIG. 25A is a schematic diagram illustrating a frame of an EHT Operation element according to the present disclosure.
FIG. 25B is a schematic diagram illustrating a format of an EHT Operation Information field of an EHT Operation element according to the present disclosure
FIG. 26 is a schematic diagram illustrating yet another example of a MU-RTS trigger frame soliciting CTS frame responses on P80 according to the present disclosure

### DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

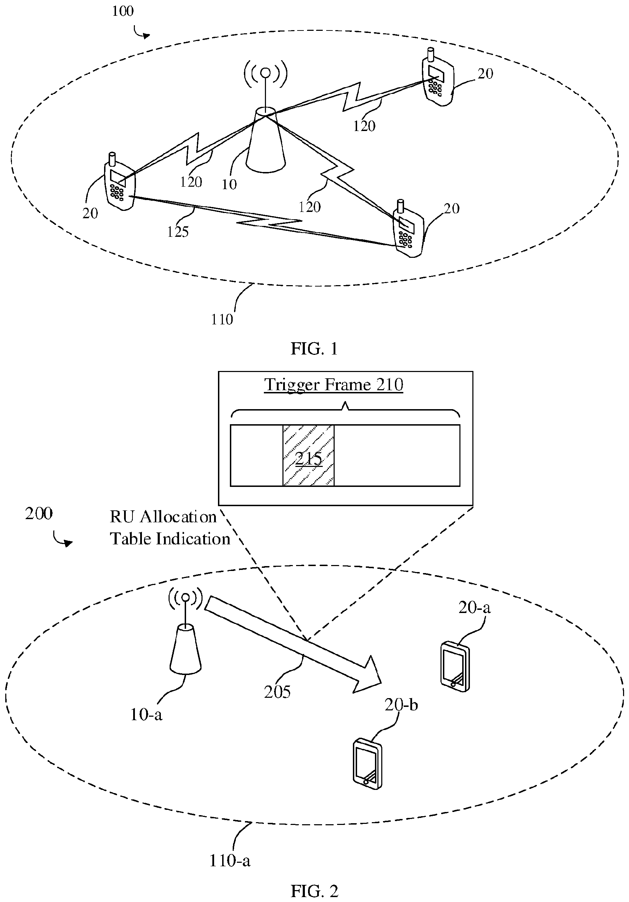

FIG. 1 illustrates an example of a wireless communications system according to the present disclosure. The wireless communications system may be an example of a wireless local area network (WLAN) 100 (also known as a Wi-Fi network) (such as next generation, next big thing (NBT), ultra-high throughput (UHT) or EHT Wi-Fi network) configured in accordance with various aspects of the present disclosure. As described herein, the terms next generation, NBT, UHT, and EHT may be considered synonymous and may each correspond to a Wi-Fi network supporting a high volume of space-time-streams. The WLAN 100 may include an AP 10 and multiple associated STAs 20, which may represent devices such as mobile stations, personal digital assistant (PDAs), other handheld devices, netbooks, notebook computers, tablet computers, laptops, display devices (such as TVs, computer monitors, etc.), printers, etc. The AP 10 and the associated stations 20 may represent a basic service set (BSS) or an extended service set (ESS). The various STAs 20 in the network can communicate with one another through the AP 10. Also illustrated is a coverage area 110 of the AP 10, which may represent a basic service area (BSA) of the WLAN 100. An extended network station (not shown) associated with the WLAN 100 may be connected to a wired or wireless distribution system that may allow multiple APs 10 to be connected in an ESS.

In some embodiments, a STA 20 may be located in the intersection of more than one coverage area 110 and may associate with more than one AP 10. A single AP 10 and an associated set of STAs 20 may be referred to as a BSS. An ESS is a set of connected BSSs. A distribution system (not shown) may be used to connect APs 10 in an ESS. In some cases, the coverage area 110 of an AP 10 may be divided into sectors (also not shown). The WLAN 100 may include APs 10 of different types (such as a metropolitan area, home network, etc.), with varying and overlapping coverage areas 110. Two STAs 20 also may communicate directly via a direct wireless link 125 regardless of whether both STAs 20 are in the same coverage area 110. Examples of direct wireless links 120 may include Wi-Fi direct connections, Wi-Fi tunneled direct link setup (TDLS) links, and other group connections. STAs 20 and APs 10 may communicate according to WLAN radio and baseband protocol for physical and media access control (MAC) layers from IEEE 802.11 and versions including, but not limited to, 802.11b, 802.11g, 802.11a, 802.11n, 802.11ac, 802.11ad, 802.11ah, 802.11ax, 802.11ay, etc. In some other implementations, peer-to-peer connections or ad hoc networks may be implemented within the WLAN 100.

FIG. 2 illustrates an example of a wireless communications system according to the present disclosure. The wireless communications system 200 may be an example of a next generation or EHT Wi-Fi system and may include an AP 10-a and STAs 20-a and 20-b, and a coverage area 110-a, which may be examples of components described with respect to FIG. 1. The AP 10-a may transmit a trigger frame 210 including a resource unit (RU) allocation table indication 215 on the downlink 205 to the STAs 20.

In some implementations, a wireless communications system 200 may be a next generation Wi-Fi system (such as, an EHT system). In some implementations, wireless communications system 200 may also support multiple communications systems. For instance, wireless communications system 200 may support EHT communications and HE communications. In some implementations, the STA 20-a and the STA 20-b may be different types of STAs. For example, the STA 20-a may be an example of an EHT STA, while the STA 20-b may be an example of an HE STA. The STA 20-b may be referred to as a legacy STA.

In some instances, EHT communications may support a larger bandwidth than legacy communications. For instance, EHT communications may occur over an available bandwidth of 320 MHz, whereas legacy communications may occur over an available bandwidth of 160 MHz. Additionally, EHT communications may support higher modulations than legacy communications. For instance, EHT communications may support 4K quadrature amplitude modulation (QAM), whereas legacy communications may support 1024 QAM. EHT communications may support a larger number of spatial streams (such as, space-time-streams) than legacy systems. In one non-limiting illustrative example, EHT communications may support 16 spatial streams, whereas legacy communications may support 8 spatial streams. In some cases, EHT communications may occur a 2.4 GHz channel, a 5 GHz channel, or a 6 GHz channel in unlicensed spectrum.

In some implementations, AP 10-a may transmit a trigger frame 210 to one or more STAs 20 (such as, STA 20-a and STA 20-b). In some implementations, the trigger frame may solicit an uplink transmission from the STAs 20. However, the trigger frame 210 may be received by an EHT STA 20-a and HE STA 20-b. The trigger frame 210 may be configured to solicit an uplink transmission from only HE STAs 20-b. In some implementations, trigger frame 210 may be configured to solicit an uplink transmission from EHT STAs 20-a. In some other implementations, the trigger frame 210 may be configured to solicit an uplink transmission from one or more EHT STAs 20-a and one or more HE STAs 20-b.

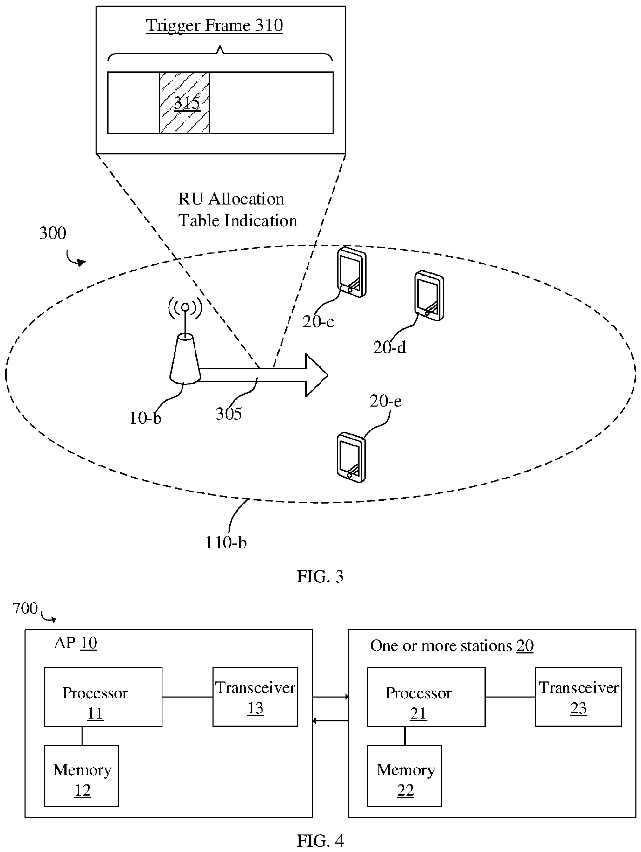

FIG. 3 illustrates an example of a wireless communications system according to the present disclosure. The wireless communications system 300 may be an example of a post-EHT Wi-Fi system and may include an AP 10-b. AP 10-b may be an example of a post-EHT AP 10. The wireless communications system 300 may include HE STA 20-c, EHT STA 20-d, and post-EHT STA 20-e, and a coverage area 110-b, which may be examples of components described with respect to FIGS. 1 and 2. The AP 10-b may transmit a trigger frame 310 including an RU allocation table indication 315 on the downlink 305 to the STAs 20. In some implementations, STAs 20 may be referred to as clients.

In some implementations, an EHT AP 10 may serve both HE STAs 20 and EHT STAs 20. The EHT AP 10 may send a trigger frame that may trigger a response from HE STAs 20 only, from EHT STAs 20 only, or from both HE STAs 20 and EHT STAs 20. STAs 20 that are scheduled in the trigger frame may respond with trigger-based PPDUs. In some implementations, an EHT AP 10 may trigger HE STAs 20 (and not EHT STAs 20) by sending an HE trigger frame format. In some implementations, an EHT AP 10 may trigger EHT STAs 20 (and not EHT STAs 20) by sending an HE trigger frame format or an HE trigger frame format including some field or bit allocation adjustments. In some implementations, an EHT AP 10 may trigger EHT STAs 20 and HE STAs 20 by sending an HE trigger frame format including some field or bit allocation adjustments.

The trigger frame 310 may solicit a response from one or more EHT STAs 20 or one or more HE STAs 20, or both. In some implementations, STAs 20 may not transmit unsolicited uplink transmissions in response to trigger frame 310. In some implementations, trigger frame 310 may solicit an uplink orthogonal frequency division multiple access (OFDMA) transmission or an OFDMA with multi-user multiple-input multiple-output (MU-MIMO) transmission.

FIG. 4 illustrates one or more stations (STAs) 20 and an access point (AP) 10 of communication in a wireless communications system 700 according to the present disclosure. FIG. 4 illustrates that, the wireless communications system 700 includes an access point (AP) 10 and one or more stations (STAs) 20. The AP 10 may include a memory 12, a transceiver 13, and a processor 11 coupled to the memory 12 and the transceiver 13. The one or more STAs 20 may include a memory 22, a transceiver 23, and a processor 21 coupled to the memory 22 and the transceiver 23. The processor 11 or 21 may be configured to implement proposed functions, procedures and/or methods described in this description. Layers of radio interface protocol may be implemented in the processor 11 or 21. The memory 12 or 22 is operatively coupled with the processor 11 or 21 and stores a variety of information to operate the processor 11 or 21. The transceiver 13 or 23 is operatively coupled with the processor 11 or 21, and the transceiver 13 or 23 transmits and/or receives a radio signal.

The processor 11 or 21 may include application-specific integrated circuit (ASIC), other chipset, logic circuit and/or data processing device. The memory 12 or 22 may include read-only memory (ROM), random access memory (RAM), flash memory, memory card, storage medium and/or other storage device. The transceiver 13 or 23 may include baseband circuitry to process radio frequency signals. When the embodiments are implemented in software, the techniques described herein can be implemented with modules (e.g., procedures, functions, and so on) that perform the functions described herein. The modules can be stored in the memory 12 or 22 and executed by the processor 11 or 21. The memory 12 or 22 can be implemented within the processor 11 or 21 or external to the processor 11 or 21 in which case those can be communicatively coupled to the processor 11 or 21 via various means as is known in the art.

In some embodiments, the processor 11 is configured to control the transceiver 13 to transmit a multi-user ready-to-send (MU-RTS) trigger frame to a plurality of stations (STAs) 20, wherein the MU-RTS trigger frame indicates whether a clear-to-send (CTS) frame response is to be transmitted by each of the plurality of STAs 20 on a primary 20 MHz channel (P20), a primary 40 MHz channel (P40), a primary 80 MHz channel (P80), a primary 160 MHz channel (P160), or a 320 MHz channel, and at least one 20 MHz channel is punctured in the P80, the P160, or the 320 MHz channel. This can solve issues in the prior art, improve transmit opportunity (TXOP) protection, provide a MU-RTS trigger/CTS frame exchange procedure for TXOP protection in an efficient manner, achieve extremely high throughput, provide good communication performance, and/or provide high reliability.

In some embodiments, the processor 21 is configured to control the transceiver 23 to receive a multi-user ready-to-send (MU-RTS) trigger frame from an access point (AP) 10, wherein the MU-RTS trigger frame indicates whether a clear-to-send (CTS) frame response is to be transmitted by the transceiver 23 on a primary 20 MHz channel (P20), a primary 40 MHz channel (P40), a primary 80 MHz channel (P80), a primary 160 MHz channel (P160), or a 320 MHz channel, and at least one 20 MHz channel is punctured in the P80, the P160, or the 320 MHz channel. This can solve issues in the prior art, improve transmit opportunity (TXOP) protection, provide a MU-RTS trigger/CTS frame exchange procedure for TXOP protection in an efficient manner, achieve extremely high throughput, provide good communication performance, and/or provide high reliability.

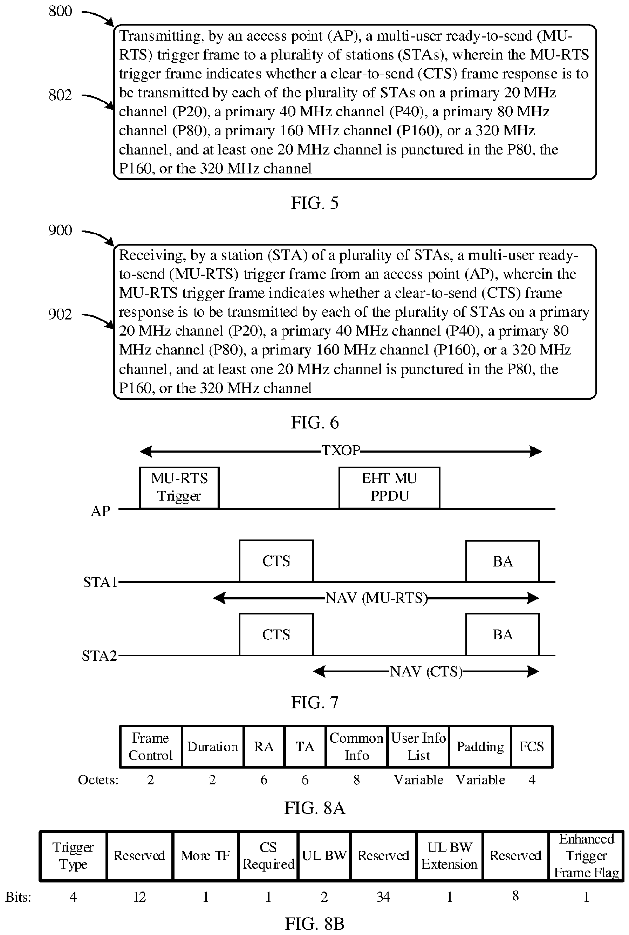

FIG. 5 illustrates a wireless communication method 800 performed by an AP according to an embodiment of the present disclosure. In some embodiments, the method 800 includes: a block 802, transmitting, by an access point (AP), a multi-user ready-to-send (MU-RTS) trigger frame to a plurality of stations (STAs), wherein the MU-RTS trigger frame indicates whether a clear-to-send (CTS) frame response is to be transmitted by each of the plurality of STAs on a primary 20 MHz channel (P20), a primary 40 MHz channel (P40), a primary 80 MHz channel (P80), a primary 160 MHz channel (P160), or a 320 MHz channel, and at least one 20 MHz channel is punctured in the P80, the P160, or the 320 MHz channel. This can solve issues in the prior art, improve transmit opportunity (TXOP) protection, provide a MU-RTS trigger/CTS frame exchange procedure for TXOP protection in an efficient manner, achieve extremely high throughput, provide good communication performance, and/or provide high reliability.

FIG. 6 illustrates a wireless communication method 900 performed by a STA according to the present disclosure. In some embodiments, the method 900 includes: a block 902, receiving, by a station (STA) of a plurality of STAs, a multi-user ready-to-send (MU-RTS) trigger frame from an access point (AP), wherein the MU-RTS trigger frame indicates whether a clear-to-send (CTS) frame response is to be transmitted by each of the plurality of STAs on a primary 20 MHz channel (P20), a primary 40 MHz channel (P40), a primary 80 MHz channel (P80), a primary 160 MHz channel (P160), or a 320 MHz channel, and at least one 20 MHz channel is punctured in the P80, the P160, or the 320 MHz channel. This can solve issues in the prior art, improve transmit opportunity (TXOP) protection, provide a MU-RTS trigger/CTS frame exchange procedure for TXOP protection in an efficient manner, achieve extremely high throughput, provide good communication performance, and/or provide high reliability.

In some embodiments, the P80, the P160 or the 320 MHz channel in which the at least one 20 MHz channel is punctured comprises one 484+242 tone multiple resource unit (MRU), one 996+484 tone MRU, one 996+484+242 tone MRU, one 2x996+484 tone MRU, one 3x996 tone MRU, or one 3x996+484 tone MRU. In some embodiments, the one 484+242 tone MRU results from puncturing any non-primary 20 MHz channel from the P80, the one 996+484 tone MRU results from puncturing any non-primary 40 MHz channel from the P160, the one 996+484+242 tone MRU results from puncturing any non-primary 20 MHz channel from the P160, the one 2x996+484 tone MRU results from puncturing any non-primary 40 MHz channel from any consecutive 240 MHz portion of the 320 MHz channel, the one 3x996 tone MRU results from puncturing any non-primary 80 MHz channel from the 320 MHz channel, or the one 3x996+484 tone MRU results from puncturing any non-primary 40 MHz channel from the 320 MHz channel. In some embodiments, each user information field of the MU-RTS trigger frame comprises a subfield and an RU allocation subfield, and the subfield and the RU allocation subfield of each user information field in the MU-RTS trigger frame indicate RU allocation information. In some embodiments, the subfield of each user information field in the MU-RTS trigger frame comprises a lower/upper 160 MHz segment subfield.

In some embodiments, the subfield of each user information field in the MU-RTS trigger frame is set to a first value if the P80, the P160 or the 320 MHz channel in which the at least one 20 MHz channel is punctured comprises the one 484+242 tone MRU, the one 996+484 tone MRU, or the one 996+484+242 tone MRU. In some embodiments, the subfield of each user information field in the MU-RTS trigger frame is set to the first value if the P80, the P160 or the 320 MHz channel in which the at least one 20 MHz channel is punctured comprises the one 2x996+484 tone MRU, the one 3x996 tone MRU, or the one 3x996+484 tone RU and the at least one 20 MHz channel is punctured from a lowest frequency 160 MHz channel of the 320 MHz channel. In some embodiments, the subfield of each user information field in the MU-RTS trigger frame is set to a second value if the P80, the P160 or the 320 MHz channel in which the at least one 20 MHz channel is punctured comprises the one 2x996+484 tone MRU, the one 3x996 tone MRU, or the one 3x996+484 tone RU and the at least one 20 MHz channel is punctured from a second lowest frequency 160 MHz channel of the 320 MHz channel.

In some embodiments, the RU allocation subfield of each user information field in the MU-RTS trigger frame is set to indicate the one 484+242 tone MRU as at least one of the followings: a first bit is set to 0 if a non-primary 20 MHz channel is punctured from the P80 which is only an 80 MHz channel or a lowest frequency 80 MHz channel of the P160; the first bit is set to 1 if the non-primary 20 MHz channel is punctured from the P80 which is a second lowest frequency 80 MHz channel of the P160; the remaining bits are set to 90 if the punctured non-primary 20 MHz channel is a lowest frequency 20 MHz channel of the P80; the remaining bits are set to 91 if the punctured non-primary 20 MHz channel is a second lowest frequency 20 MHz channel of the P80; the remaining bits are set to 92 if the punctured non-primary 20 MHz channel is a third lowest frequency 20 MHz channel of the P80; or the remaining bits are set to 93 if the punctured non-primary 20 MHz channel is a fourth lowest frequency 20 MHz channel of the P80.

In some embodiments, the RU allocation subfield of each user information field in the MU-RTS trigger frame is set to indicate the one 996+484 tone MRU as at least one of the followings: the first bit is set to 0 if a non-primary 40 MHz channel is punctured from a lowest frequency 80 MHz channel of the P160; the first bit is set to 1 if the non-primary 40 MHz channel is punctured from a second lowest frequency 80 MHz channel of the P160; the remaining bits are set to 94 if the punctured non-primary 40 MHz channel is a lowest frequency 40 MHz channel of any 80 MHz channel of the P160; or the remaining bits are set to 95 if the punctured non-primary 40 MHz channel is a second lowest frequency 40 MHz channel of any 80 MHz channel of the P160. In some embodiments, the RU allocation subfield of each user information field in the MU-RTS trigger frame is set to indicate the one 996+484+242 tone MRU as at least one of the followings: the first bit is set to 0 if the non-primary 20 MHz channel is punctured from the lowest frequency 80 MHz channel of the P160; the first bit is set to 1 if the non-primary 20 MHz channel is punctured from the second lowest frequency 80 MHz channel of the P160; the remaining bits are set to 96 if the punctured non-primary 20 MHz channel is a lowest frequency 20 MHz channel of any 80 MHz channel of the P160; the remaining bits are set to 97 if the punctured non-primary 20 MHz channel is a second lowest frequency 20 MHz channel of any 80 MHz channel of the P160; the remaining bits are set to 98 if the punctured non-primary 20 MHz channel is a third lowest frequency 20 MHz channel of any 80 MHz channel of the P160; or the remaining bits are set to 99 if the punctured non-primary 20 MHz channel is a fourth lowest frequency 20 MHz channel of any 80 MHz channel of the P160.

In some embodiments, the RU allocation subfield of each user information field in the MU-RTS trigger frame is set to indicate the one 2x996+484 tone MRU as at least one of the followings: the first bit is set to 0 if the punctured non-primary 40 MHz channel is a part of a lowest frequency 80 MHz channel of any 160 MHz channel; the first bit is set to 1 if the punctured non-primary 40 MHz channel is a part of a second lowest frequency 80 MHz channel of any 160 MHz channel; the remaining bits are set to 100 if the punctured non-primary 40 MHz channel is a lowest frequency 40 MHz channel of any 80 MHz channel in a lower consecutive 240 MHz portion of the 320 MHz channel; the remaining bits are set to 101 if the punctured non-primary 40 MHz channel is a second lowest frequency 40 MHz channel of any 80 MHz channel in the lower consecutive 240 MHz portion of the 320 MHz channel; the remaining bits are set to 102 if the punctured non-primary 40 MHz channel is a lowest frequency 40 MHz channel of any 80 MHz channel in an upper consecutive 240 MHz portion of the 320 MHz channel; or the remaining bits are set to 103 if the punctured non-primary 40 MHz channel is a second lowest frequency 40 MHz channel of any 80 MHz channel in the upper consecutive 240 MHz portion of the 320 MHz channel. In some embodiments, the RU allocation subfield of each user information field in the MU-RTS trigger frame is set to indicate the one 3x996 tone MRU as at least one of the followings: the first bit is set to 0 if a punctured non-primary 80 MHz channel is a lowest frequency 80 MHz channel of any 160 MHz channel; the first bit is set to 1 if the punctured non-primary 80 MHz channel is a second lowest frequency 80 MHz channel of any 160 MHz channel; or the remaining bits are set to 104.

In some embodiments, the RU allocation subfield of each user information field in the MU-RTS trigger frame is set to indicate the one 3x996+484 tone MRU as at least one of the followings: the first bit is set to 0 if a punctured non-primary 40 MHz channel is a part of a lowest frequency 80 MHz channel of any 160 MHz channel; the first bit is set to 1 if the punctured non-primary 40 MHz channel is a part of a second lowest frequency 80 MHz channel of any 160 MHz channel; the remaining bits are set to 105 if the punctured non-primary 40 MHz channel is a lowest frequency 40 MHz channel of any 80 MHz channel; or the remaining bits are set to 106 if the punctured non-primary 40 MHz channel is a second lowest frequency 40 MHz channel of any 80 MHz channel.

In some embodiments, the MU-RTS trigger frame and/or the CTS frame response is operated in an extremely high throughput (EHT) wireless local area network (WLAN) or a post-EHT WLAN.

Abbreviations and acronyms of some embodiment of the present disclosure are illustrated in Table 1.

**Table 1:**

| | |
|---|---|
| IEEE | Institute of Electrical and Electronics Engineers |
| WLAN | Wireless local area network |
| BSS | Basic service set |
| AP | Access point |
| STA | Station |
| PHY | Physical layer |
| MAC | Medium Access Control |
| PPDU | PHY Protocol Data Unit |
| HT | High Throughput |
| HE | High Efficiency |
| EHT | Extremely High Throughput |
| MU | Multi-user |
| OFDMA | Orthogonal frequency division multiple access |
| BW | Bandwidth |
| MRU | Multiple Resource Units |
| BA | Block acknowledgement |
| RTS | Ready-To-Send |
| CTS | Clear-To-Send |
| TXOP | Transmit Opportunity |
| NAV | Network Allocation Vector |

FIG. 7 illustrates an example of multi-user ready-to-send (MU-RTS)/clear-to-send (CTS)/downlink (DL) extremely high throughput (EHT) MU physical layer (PHY) protocol data unit (PPDU)/acknowledgment responses according to the present disclosure. FIG. 7 illustrates that, in some embodiments, in IEEE 802.11be EHT WLAN, a MU-RTS trigger/CTS frame exchange procedure allows an AP to initiate a TXOP and protect TXOP frame exchanges. FIG. 7 illustrates an example of the exchange of MU-RTS trigger frame and simultaneous CTS frame responses to protect an EHT MU PPDU and acknowledgement responses in an IEEE 802.11be EHT WLAN.

FIG. 8A illustrates a trigger frame format according to the present disclosure. FIG. 8A illustrates that, in some embodiments, a MU-RTS trigger frame is used to solicit simultaneous CTS frame transmissions from multiple HE STAs and/or EHT STAs. The MU-RTS trigger frame is one of various types of trigger frame. The trigger frame format is illustrated in FIG. 8A, which includes a common information field and a user information list field comprising one or more user information fields. The formats of the common information field and user information field depend on the type of trigger frame.

FIG. 8B illustrates a format of a common information field of a MU-RTS trigger frame according to the present disclosure. FIG. 8B illustrates that, in some embodiments, an enhanced trigger frame flag subfield is set to a first value (such as 0) to indicate a trigger frame compliant with the IEEE 802.11ax specification, and the enhanced trigger frame flag subfield is set to a second value (such as 1) to indicate an enhanced trigger frame compliant with the IEEE 802.11be specification. If the enhanced trigger frame flag subfield is set to the first value (such as 0), the UL BW extension subfield is reserved, and the UL BW subfield indicates the bandwidth of the PPDU carrying the MU-RTS trigger frame, which is 20 MHz, 40 MHz, 80 MHz, or 160/80+80 MHz. If the enhanced trigger frame flag subfield is set to a second value (such as 1), the UL BW subfield, together with the UL BW extension subfield, indicates the bandwidth of the PPDU carrying the MU-RTS trigger frame, which is 20 MHz, 40 MHz, 80 MHz, 160 MHz, or 320 MHz.

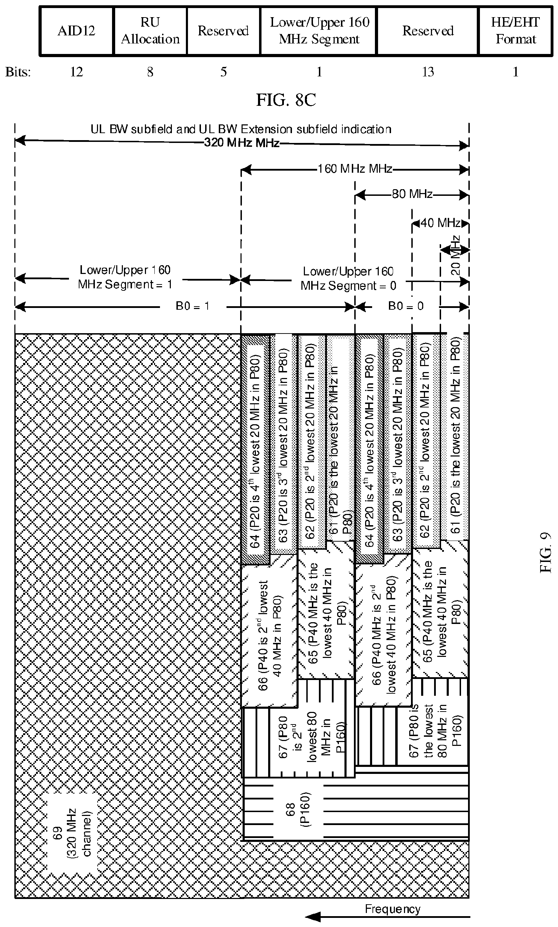

FIG. 8C illustrates a format of a user information field of a MU-RTS trigger frame according to the present disclosure. FIG. 8C illustrates that, in some embodiments, a HE/EHT format subfield is set to a first value (such as 0) to indicate HE format, and the HE/EHT format subfield is set to a second value (such as 1) to indicate EHT format. The value of the HE/EHT format subfield of a user information field determines how the remaining subfields of the user information field are interpreted. If the HE/EHT format subfield of a user information field is set to the first value (such as 0), a lower/upper 160 MHz segment subfield is reserved, and an RU allocation subfield indicates whether the CTS frame response is to be sent by the STA indicated by an AID12 subfield on a primary 20 MHz channel (P20), a primary 40 MHz channel (P40), a primary 80 MHz channel (P80) or 160/80+80 MHz channel. If the HE/EHT format subfield of a user information field is set to the second value (such as 1), the RU allocation subfield, together with the lower/upper 160 MHz segment subfield, indicates how the CTS frame response is to be sent by the STA indicated by the AID12 subfield.

According to some embodiments of the present disclosure, a CTS frame sent in response to a MU-RTS trigger frame shall be carried in a non-HT or non-HT duplicate PPDU, which is transmitted on the 20 MHz channels indicated in the RU allocation subfield and the lower/upper 160 MHz segment subfield of the user Information field of the MU-RTS trigger frame. According to some embodiments of the present disclosure, in each 20 MHz channel occupied by the PPDU that contains a MU-RTS trigger frame, a transmitter of the MU-RTS trigger frame shall request at least one STA to send a CTS frame response that occupies the 20 MHz channel. The transmitter of a MU-RTS trigger frame shall not request a non-AP STA to send a CTS frame response in a 20 MHz channel that is not occupied by the PPDU that contains the MU-RTS trigger frame. According to some embodiments of the present disclosure, when receiving a MU-RTS trigger frame from an AP or a CTS frame from a STA, a third-party STA may update its NAV according to the value of the duration field of MU-RTS trigger frame or CTS frame and avoid to access channel when its NAV indicates channel busy.

### Embodiment:

FIG. 9 illustrates a schematic diagram illustrating settings for a resource unit (RU) allocation subfield and a lower/upper 160 MHz segment subfield in a MU-RTS trigger frame according to an embodiment of the present disclosure. FIG. 9 illustrates that, in some embodiments, if a HE/EHT format subfield of a user information field is set to a second value (such as 1), the RU allocation subfield, together with the lower/upper 160 MHz segment subfield, indicates whether a CTS frame response is to be sent by the STA indicated by an AID12 subfield on a primary 20 MHz channel (P20), a primary 40 MHz channel (P40), a primary 80 MHz channel (P80), a primary 160 MHz channel (P160), or 320 MHz channel. The settings for the RU allocation subfield and lower/upper 160 MHz segment subfield are illustrated in FIG. 9. The lower/upper 160 MHz segment subfield is set to a first value (such as 0) to indicate the P20, the P40, the P80, or the P160; while the lower/upper 160 MHz segment subfield is set to the second value (such as 1) to indicate the 320 MHz channel. The RU allocation subfield is set to indicate the P20 as follows: a first bit, B0, is set to 0 if the P20 is the only 20 MHz channel, a part of the only 40 MHz channel, or a part of the P80 which is the only 80 MHz channel or the lowest frequency 80 MHz channel of the P160; and B0 set to 1 if the P20 is a part of the P80 which is the second lowest frequency 80 MHz channel of the P160. The remaining bits, B7-B1 (B7, B6, B5, B4, B3, B2, and B1), are set to 61 if the P20 is the only 20 MHz channel or the lowest frequency 20 MHz channel of the only 40 MHz channel or P80. B7-B1 are set to 62 if the P20 is the second lowest frequency 20 MHz channel in the only 40 MHz channel or P80. B7-B1 are set to 63 if the P20 is the third lowest frequency 20 MHz channel in the P80. B7-B1 are set to 64 if the P20 is the fourth lowest frequency 20 MHz channel in the P80. The RU allocation subfield has 8 bits. The first bit refers to B0 and is the least significant bit (LSB). The remaining bits refer to B1 to B7 (B7 to B1).

The RU allocation subfield is set to indicate the P40 as follows: B0 is set to 0 if the P40 is the only 40 MHz channel or a part of the P80 which is the only 80 MHz channel or the lowest frequency 80 MHz channel of the P160; and B0 is set to 1 if the P40 is a part of the P80 which is the second lowest frequency 80 MHz channel of the P160. B7-B1 are set to 65 if the P40 is the only 40 MHz channel or the lowest frequency 40 MHz channel of the P80. B7-B1 are set to 66 if the P40 is the second lowest frequency 40 MHz channel in the P80.

The RU Allocation subfield is set to indicate the P80 as follows: B0 is set to 0 if the P80 is the only 80 MHz channel or the lowest frequency 80 MHz channel in the P160 and set to 1 if the P80 is the second lowest frequency 80 MHz channel in the P160. B7-B1 are set to 67. In addition, B0 of the RU allocation subfield is set to 1 and B7-B1 of the RU allocation subfield are set to 68 to indicate the P160. B0 of the RU allocation subfield is set to 1 and B7-B1 of the RU allocation subfield are set to 69 to indicate the 320 MHz channel. A STA ignores B0 of the RU allocation subfield and the lower/upper 160 MHz segment subfield for 320 MHz indication.

According to the above embodiment, the settings of RU allocation subfield for indicating P20, P40, P80, and P160 is backward compatible to the settings of RU allocation subfield for indicating P20, P40, P80, and 160/80+80 MHz channel in the IEEE 802.11ax specification, which minimizes implementation complexity.

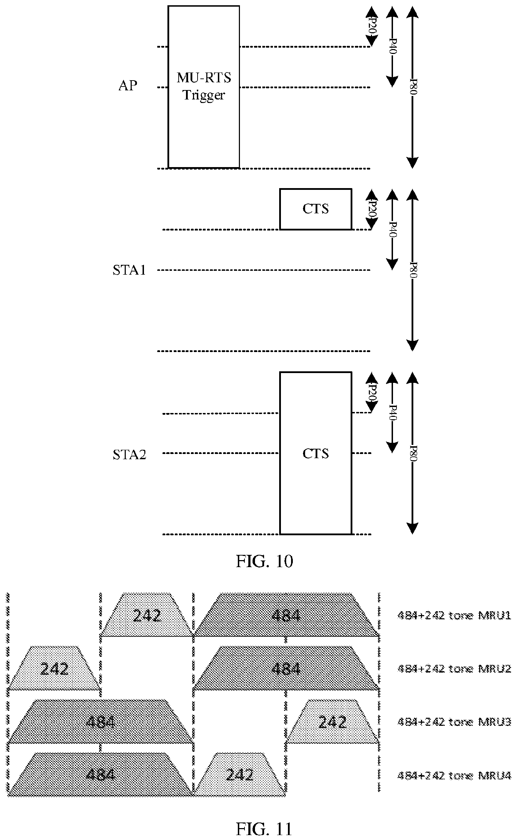

FIG. 10 illustrates an example of the exchange of MU-RTS trigger frame and simultaneous CTS frame responses on the P80 in a TXOP according to the present disclosure. In this example, a MU-RTS trigger frame is transmitted in a non-HT duplicate PPDU on the P80. Further, in the user information field addressed to STA1, the lower/upper 160 MHz segment subfield is set to 0; and a first bit, B0, and the remaining bits, B7-B1, of the RU allocation subfield are set to 0 and 64, respectively; while in the user information field addressed to STA2, the lower/upper 160 MHz segment subfield is set to 0; and B0 and B7-B1 of RU allocation subfield are set to 0 and 67, respectively. In other words, the MU-RTS trigger frame requests STA1 to transmit a CTS frame response in a non-HT PPDU on the P20 which is the fourth lowest frequency 20 MHz channel in the P80 and requests STA2 to transmit a CTS frame response in a non-HT duplicate PPDU on the P80. In this example, even if the transmissions following the MU-RTS trigger/CTS frame exchange in the TXOP occupy a partial BW of the P80 (e.g. one 484+242 tone MRU), the MU-RTS trigger frame has to request at least one of STA1 and STA2 to transmit a CTS frame response in a non-HT duplicate PPDU on the P80, which may cause TXOP overprotection.

### Embodiment:

According to another embodiment, if the HE/EHT format subfield of a user information field is set to a second value (such as 1), the RU allocation subfield, together with the lower/upper 160 MHz segment subfield, further indicates whether the CTS frame response is to be sent by the STA indicated by the AID12 subfield on the P80, P160 or 320 MHz channel in which at least one 20 MHz channel is punctured. The P80, P160 or 320 MHz channel in which at least one 20 MHz channel is punctured is one 484+242 tone MRU which results from puncturing any non-primary 20 MHz channel from the P80, one 996+484 tone MRU which results from puncturing any non-primary 40 MHz channel from the P160, one 996+484+242 tone MRU which results from puncturing any non-primary 20 MHz channel from the P160, 2x996+484 tone MRU which results from puncturing any non-primary 40 MHz channel from any consecutive 240 MHz portion of the 320 MHz channel, one 3x996 tone MRU which results from puncturing any non-primary 80 MHz channel from the 320 MHz channel, or one 3x996+484 tone MRU which results from puncturing any non-primary 40 MHz channel from the 320 MHz channel.

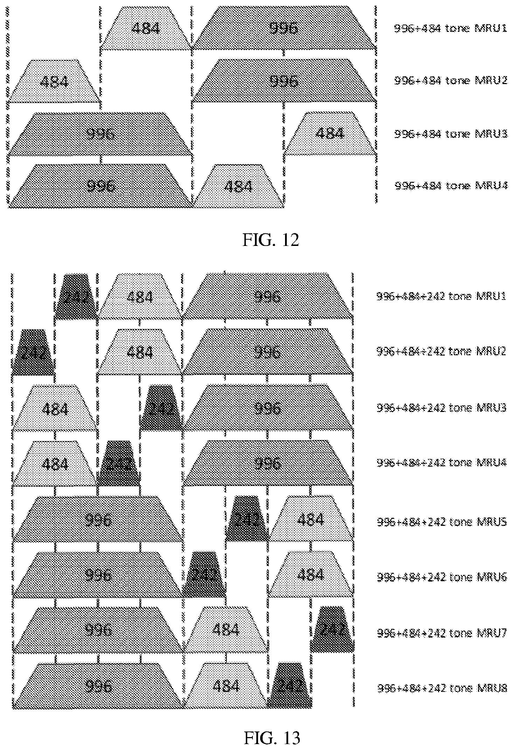

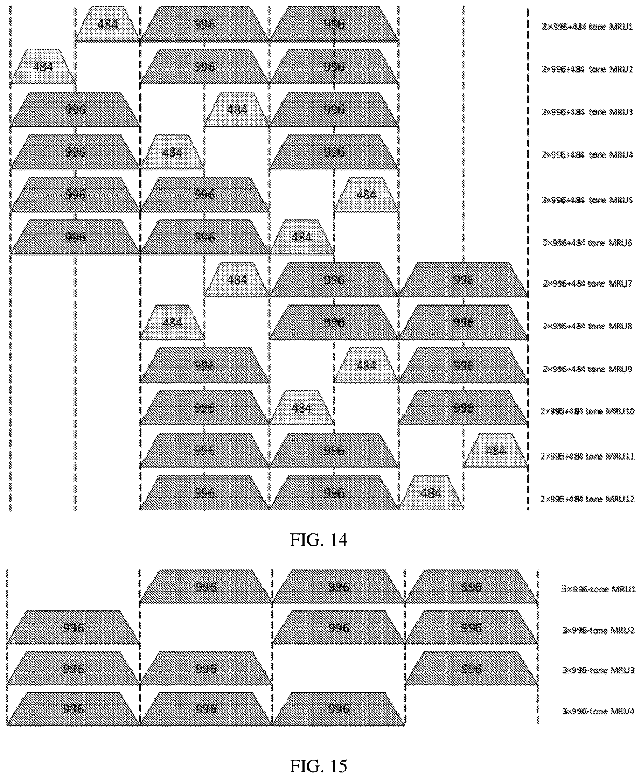

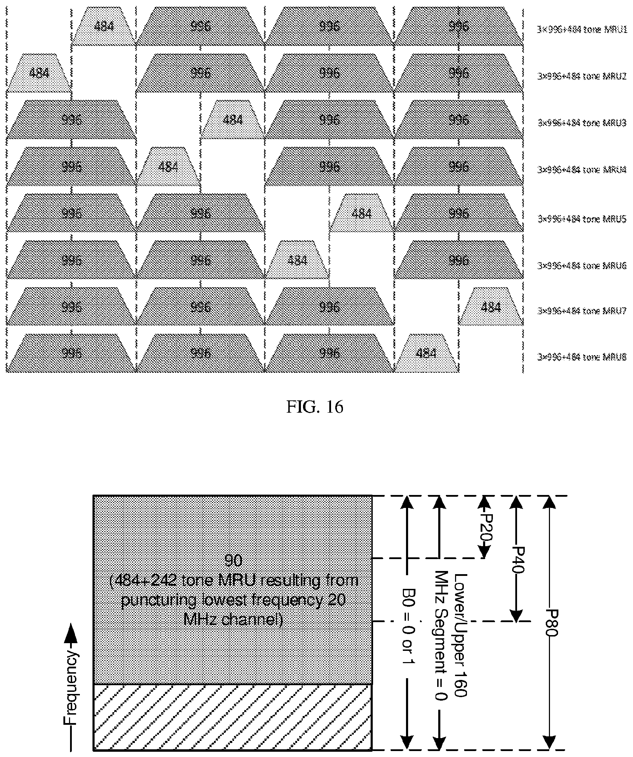

In some embodiments, large size MRUs defined for downlink (DL) and uplink (UL) transmissions in non-OFDMA format are as follows: 484+242 tone MRU, 996+484 tone MRU, 996+484+242 tone MRU, 2x996+484 tone MRU, 3x996 tone MRU, and 3x996+484 tone MRU. FIG. 11 illustrates four allowed 484+242 tone MRUs in non-OFDMA 80 MHz EHT PPDU according to the present disclosure. FIG. 11 illustrates that, in some embodiments, the 484+242 tone MRU is allowed in non-OFDMA 80 MHz EHT PPDU. The 484+242 tone MRU is obtained by puncturing any one of four 242-tone RUs in the 80 MHz EHT PPDU. FIG. 12 illustrates four allowed 996+484 tone MRUs in non-OFDMA 160 MHz EHT PPDU according to the present disclosure. FIG. 12 illustrates that, in some embodiments, the 996+484 tone MRU is allowed in non-OFDMA 160 MHz EHT PPDU. The 996+484 tone MRU is obtained by puncturing any one of four 484-tone RUs in the 160 MHz EHT PPDU. FIG. 13 illustrates eight allowed 996+484+242 tone MRUs in non-OFDMA 160 MHz EHT PPDU according to an embodiment of the present disclosure. FIG. 13 illustrates that, in some embodiments, the 996+484+242 tone MRU is allowed in non-OFDMA 160 MHz EHT PPDU. The 996+484+242 tone MRU is obtained by puncturing any one of eight 242-tone RUs in the 160 MHz EHT PPDU. FIG. 14 illustrates twelve allowed 2x996+484 tone MRUs in non-OFDMA 320 MHz EHT PPDU according to an embodiment of the present disclosure. FIG. 14 illustrates that, in some embodiments, the 2x996+484 tone MRU is allowed in non-OFDMA 320 MHz EHT PPDU. The 2x 996+484 tone MRU is obtained by puncturing any one of six 484-tone RUs in 240 MHz transmission defined as 320 MHz EHT PPDU with 80 MHz punctured. FIG. 15 illustrates four allowed 3x996 tone MRUs in non-OFDMA 320 MHz EHT PPDU according to the present disclosure. FIG. 15 illustrates that, in some embodiments, the 3x996 tone MRU is allowed in non-OFDMA 320 MHz EHT PPDU. The 3x996 tone MRU is obtained by puncturing any one of four 996-tone RUs in the 320 MHz EHT PPDU. FIG. 16 illustrates eight allowed 3x996+484 tone MRUs in non-OFDMA 320 MHz EHT PPDU according to the present disclosure. FIG 16 illustrates that, in some embodiments, the 3x996+484 tone MRU is allowed in non-OFDMA 320 MHz EHT PPDU. The 3x996+484 tone MRU is obtained by puncturing any one of eight 484-tone RUs in the 320 MHz EHT PPDU.

In some embodiments, the P80 in which the at least one 20 MHz channel is punctured comprises one 484+242 tone multiple resource unit (MRU). In some embodiments, the P80 in which at least one 20 MHz channel is punctured is one 484+242 tone MRU which results from puncturing any non-primary 20 MHz channel from the P80. In some embodiments, the P160 in which the at least one 20 MHz channel is punctured comprises one 996+484 tone MRU or one 996+484+242 tone MRU. In some embodiments, the P160 in which at least one 20 MHz channel is punctured is one 996+484 tone MRU which results from puncturing any non-primary 40 MHz channel from the P160, or one 996+484+242 tone MRU which results from puncturing any non-primary 20 MHz channel from the P160. In some embodiments, the 320 MHz channel in which the at least one 20 MHz channel is punctured comprises one 2x996+484 tone MRU, one 3x996 tone MRU, or one 3x996+484 tone MRU. In some embodiments, the 320 MHz channel in which at least one 20 MHz channel is punctured is 2x996+484 tone MRU which results from puncturing any non-primary 40 MHz channel from any consecutive 240 MHz portion of the 320 MHz channel, one 3x996 tone MRU which results from puncturing any non-primary 80 MHz channel from the 320 MHz channel, or one 3x996+484 tone MRU which results from puncturing any non-primary 40 MHz channel from the 320 MHz channel.

According to an embodiment, the lower/upper 160 MHz segment subfield is set to a first value (such as 0) if the P80, P160 or 320 MHz channel in which at least one 20 MHz channel is punctured is one 484+242 tone MRU, one 996+484 tone MRU, or one 996+484+242 tone MRU. In some examples, the lower/upper 160 MHz segment subfield is set to a first value (such as 0) if the P80 in which at least one 20 MHz channel is punctured is one 484+242 tone MRU. The lower/upper 160 MHz segment subfield is set to a first value (such as 0) if the P160 in which at least one 20 MHz channel is punctured is one 996+484 tone MRU, or one 996+484+242 tone MRU. According to an embodiment, the lower/upper 160 MHz segment subfield is set to 0 if the P80, P160 or 320 MHz channel in which at least one 20 MHz channel is punctured is one 2x996+484 tone MRU, one 3x996 tone MRU or one 3x996+484 tone RU and the at least one 20 MHz channel is punctured from the lowest frequency 160 MHz channel of 320 MHz channel; and set to 1 if the P80, P160 or 320 MHz channel in which at least one 20 MHz channel is punctured is one 2x996+484 tone MRU, one 3x996 tone MRU or one 3x996+484 tone RU and the at least one 20 MHz channel is punctured from the second lowest frequency 160 MHz channel of 320 MHz channel. In some examples, the lower/upper 160 MHz segment subfield is set to 0 if the 320 MHz channel in which at least one 20 MHz channel is punctured is one 2x996+484 tone MRU, one 3x996 tone MRU or one 3x996+484 tone RU and the at least one 20 MHz channel is punctured from the lowest frequency 160 MHz channel of 320 MHz channel; and set to 1 if the 320 MHz channel in which at least one 20 MHz channel is punctured is one 2x996+484 tone MRU, one 3x996 tone MRU or one 3x996+484 tone RU and the at least one 20 MHz channel is punctured from the second lowest frequency 160 MHz channel of 320 MHz channel. In some embodiments, the first value and the second value have different values. In some embodiments, the first value is one of 0 and 1, and the second value is the other of 0 and 1.

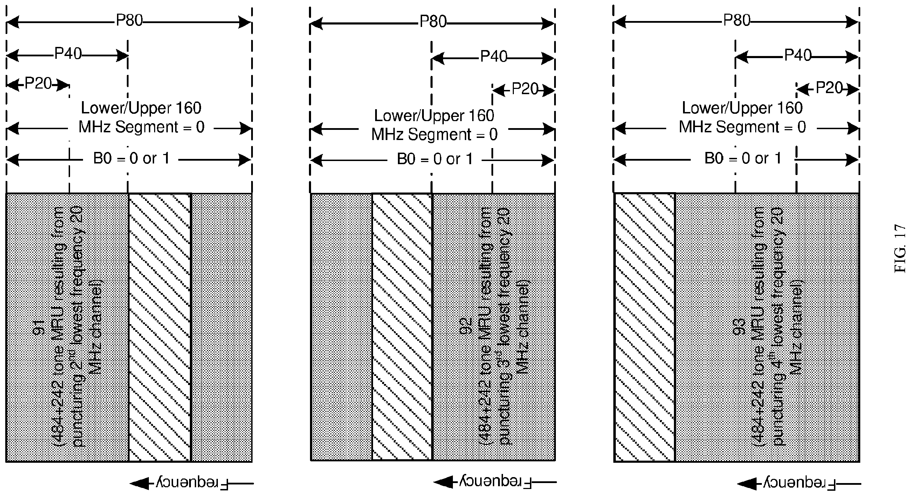

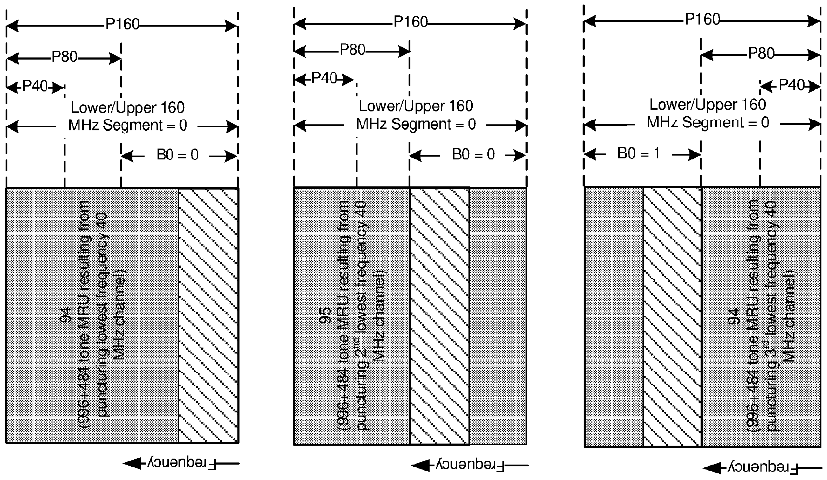

FIG. 17 illustrates settings for an RU allocation subfield and a lower/upper 160 MHz segment subfield in a MU-RTS trigger frame for indicating one 484+242 tone multiple resource unit (MRU) according to an embodiment of the present disclosure. FIG. 17 illustrates that, in some embodiments, the RU allocation subfield is set to indicate the 484+242 tone MRU as follows: A first bit, B0, is set to 0 if a non-primary 20 MHz channel is punctured from the P80 which is the only 80 MHz channel or the lowest frequency 80 MHz channel of the P160. B0 is set to 1 if a non-primary 20 MHz channel is punctured from the P80 which is the second lowest frequency 80 MHz channel of the P160. The remaining bits, B7-B1, are set to 90 if the punctured non-primary 20 MHz channel is the lowest frequency 20 MHz channel of the P80. B7-B1 are set to 91 if the punctured non-primary 20 MHz channel is the second lowest frequency 20 MHz channel of the P80. B7-B1 are set to 92 if the punctured non-primary 20 MHz channel is the third lowest frequency 20 MHz channel of the P80. B7-B 1 are set to 93 if the punctured non-primary 20 MHz channel is the fourth lowest frequency 20 MHz channel of the P80. In some embodiments, the RU allocation subfield is set to indicate the 484+242 tone MRU as follows: A first bit, B0, is set to 1 if a non-primary 20 MHz channel is punctured from the P80 which is the only 80 MHz channel or the lowest frequency 80 MHz channel of the P160. B0 is set to 0 if a non-primary 20 MHz channel is punctured from the P80 which is the second lowest frequency 80 MHz channel of the P160. The values of the first bit B0 and the remaining bits B1 to B7 are examples, and the disclosure is not limited to this. In some embodiments, the first bit B0 can be 0 or 1. In some embodiments, the remaining bits B1 to B7 (B1, B2, B3, B4, B5, B6, and B7) have different values from the above example values and the values of B1 to B7 are equal to or greater than 90 and equal to or less than 255. The RU allocation subfield has 8 bits. The first bit refers to B0 and is the least significant bit (LSB). The remaining bits refer to B1 to B7 (B7 to B1).

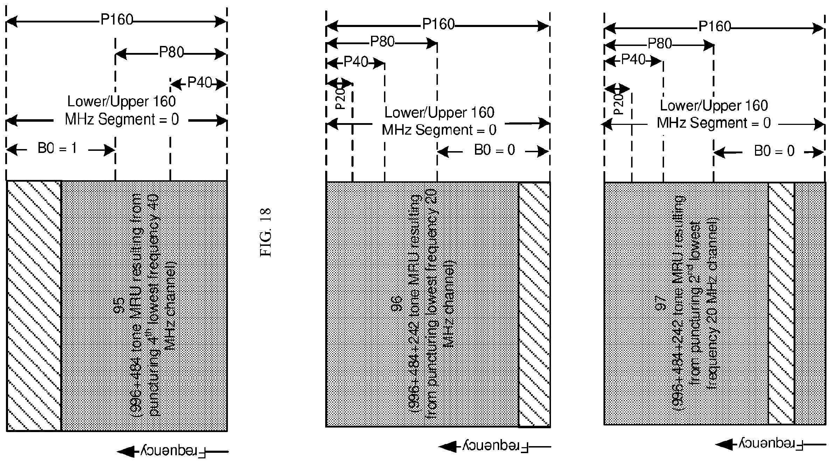

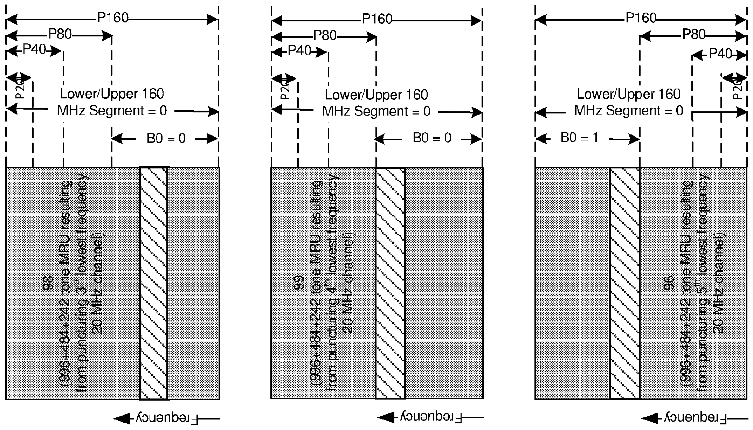

FIG. 18 illustrates settings for an RU allocation subfield and a lower/upper 160 MHz segment subfield in a MU-RTS trigger frame for indicating one 996+484 tone MRU according to an embodiment of the present disclosure. FIG. 18 illustrates that, in some embodiments, the RU allocation subfield is set to indicate the 996+484 tone MRU as follows: B0 is set to 0 if a non-primary 40 MHz channel is punctured from the lowest frequency 80 MHz channel of the P160. B0 is set to 1 if a non-primary 40 MHz channel is punctured from the second lowest frequency 80 MHz channel of the P160. B7-B1 are set to 94 if the punctured non-primary 40 MHz channel is the lowest frequency 40 MHz channel of any 80 MHz channel of the P160. B7-B1 are set to 95 if the punctured non-primary 40 MHz channel is the second lowest frequency 40 MHz channel of any 80 MHz channel of the P160. In some embodiments, the RU allocation subfield is set to indicate the 996+484 tone MRU as follows: B0 is set to 1 if a non-primary 40 MHz channel is punctured from the lowest frequency 80 MHz channel of the P160. B0 is set to 0 if a non-primary 40 MHz channel is punctured from the second lowest frequency 80 MHz channel of the P160. The values of the first bit B0 and the remaining bits B1 to B7 are examples, and the disclosure is not limited to this. In some embodiments, the first bit B0 can be 0 or 1. In some embodiments, B1 to B7 (B1, B2, B3, B4, B5, B6, and B7) have different values from the above example values and the values of B1 to B7 are equal to or greater than 90 and equal to or less than 255.

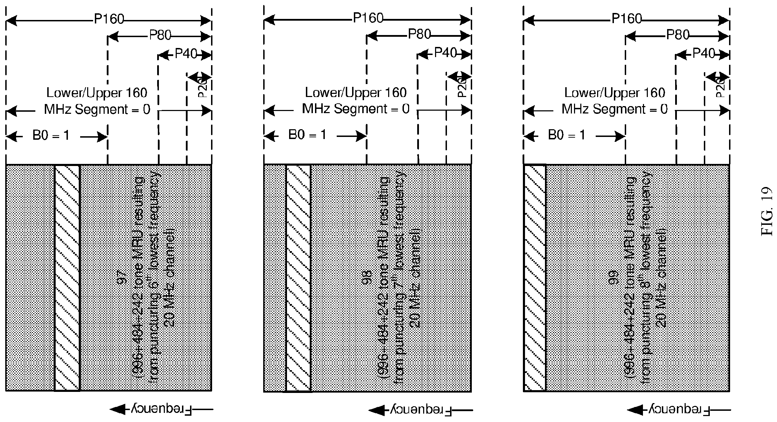

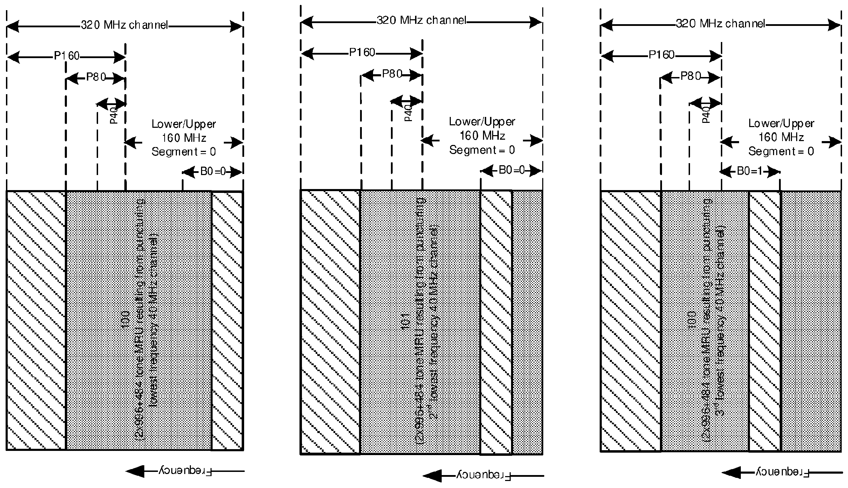

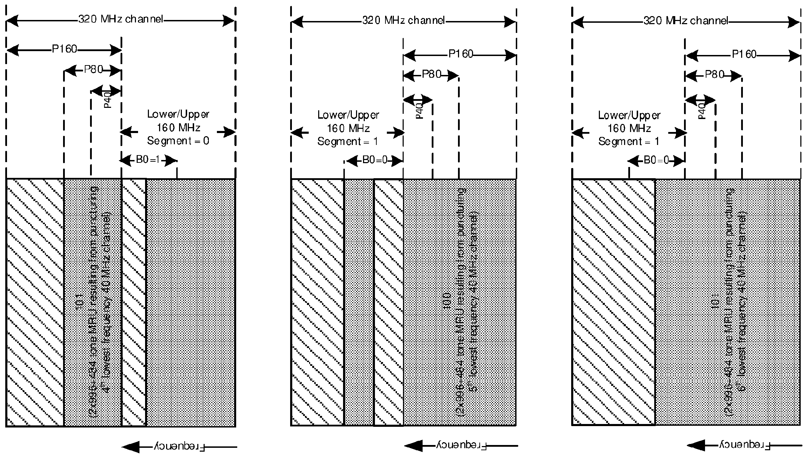

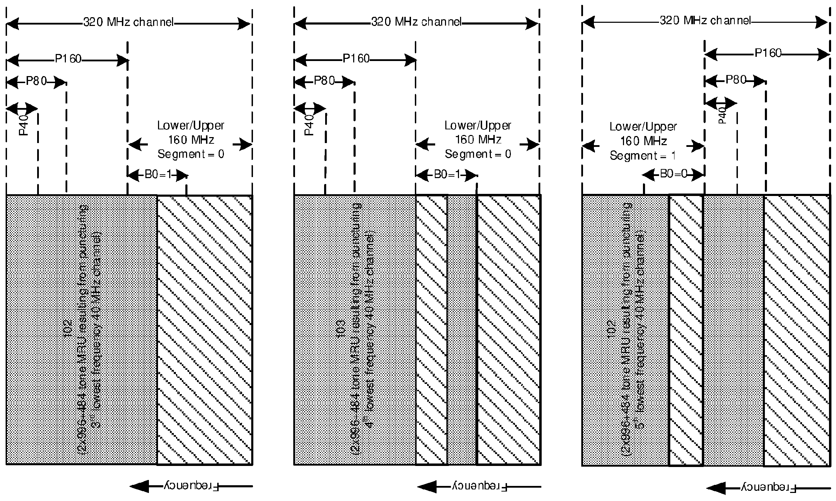

FIG. 19 illustrates settings for an RU allocation subfield and a lower/upper 160 MHz segment subfield in a MU-RTS trigger frame for indicating one 996+484+242 tone MRU according to an embodiment of the present disclosure. FIG. 19 illustrates that, in some embodiments, the RU allocation subfield is set to indicate the 996+484+242 tone MRU as follows: B0 is set to 0 if a non-primary 20 MHz channel is punctured from the lowest frequency 80 MHz channel of the P160. B0 is set to 1 if a non-primary 20 MHz channel is punctured from the second lowest frequency 80 MHz channel of the P160. B7-B1 are set to 96 if the punctured non-primary 20 MHz channel is the lowest frequency 20 MHz channel of any 80 MHz channel of the P160. B7-B1 are set to 97 if the punctured non-primary 20 MHz channel is the second lowest frequency 20 MHz channel of any 80 MHz channel of the P160. B7-B1 are set to 98 if the punctured non-primary 20 MHz channel is the third lowest frequency 20 MHz channel of any 80 MHz channel of the P160. B7-B1 are set to 99 if the punctured non-primary 20 MHz channel is the fourth lowest frequency 20 MHz channel of any 80 MHz channel of the P160. In some embodiments, the RU allocation subfield is set to indicate the 996+484+242 tone MRU as follows: B0 is set to 1 if a non-primary 20 MHz channel is punctured from the lowest frequency 80 MHz channel of the P160. B0 is set to 0 if a non-primary 20 MHz channel is punctured from the second lowest frequency 80 MHz channel of the P160. The values of the first bit B0 and the remaining bits B1 to B7 are examples, and the disclosure is not limited to this. In some embodiments, the first bit B0 can be 0 or 1. In some embodiments, B1 to B7 (B1, B2, B3, B4, B5, B6, and B7) have different values from the above example values and the values of B1 to B7 are equal to or greater than 90 and equal to or less than 255.

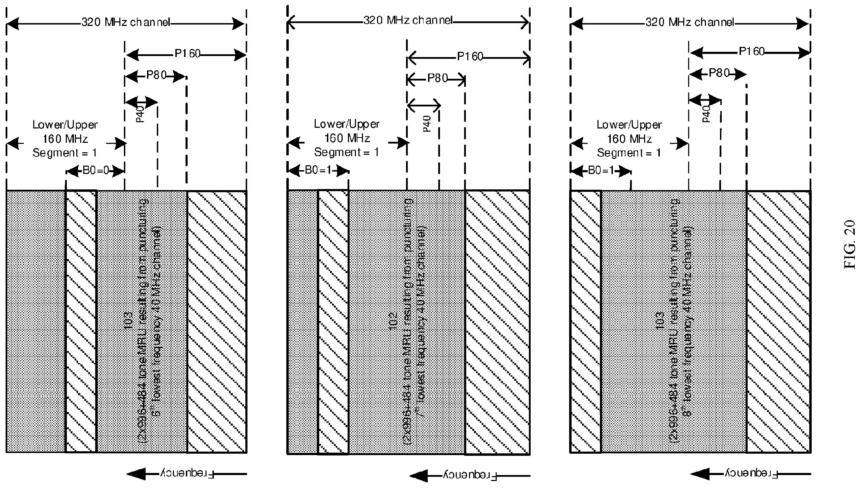

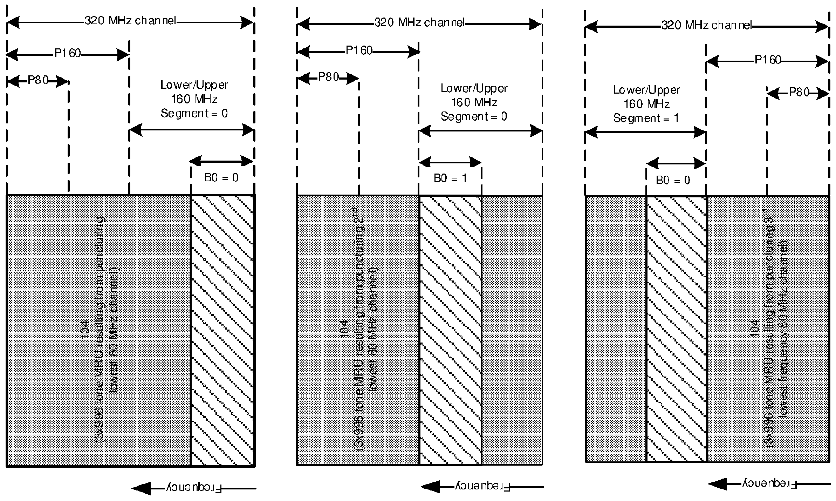

FIG. 20 illustrates settings for an RU allocation subfield and a lower/upper 160 MHz segment subfield in a MU-RTS trigger frame for indicating one 2x996+484 tone MRU according to an embodiment of the present disclosure. FIG. 20 illustrates that, in some embodiments, the RU allocation subfield is set to indicate 2x996+484 tone MRU as follows: B0 is set to 0 if the punctured non-primary 40 MHz channel is a part of the lowest frequency 80 MHz channel of any 160 MHz channel; and set to 1 if the punctured non-primary 40 MHz channel is a part of the second lowest frequency 80 MHz channel of any 160 MHz channel. B7-B1 are set to 100 if the punctured non-primary 40 MHz channel is the lowest frequency 40 MHz channel of any 80 MHz channel in lower consecutive 240 MHz portion of the 320 MHz channel. B7-B1 are set to 101 if the punctured non-primary 40 MHz channel is the second lowest frequency 40 MHz channel of any 80 MHz channel in lower consecutive 240 MHz portion of the 320 MHz channel. B7-B1 are set to 102 if the punctured non-primary 40 MHz channel is the lowest frequency 40 MHz channel of any 80 MHz channel in upper consecutive 240 MHz portion of the 320 MHz channel. B7-B1 are set to 103 if the punctured non-primary 40 MHz channel is the second lowest frequency 40 MHz channel of any 80 MHz channel in upper consecutive 240 MHz portion of the 320 MHz channel. In some examples, the 2x 996+484 tone MRU is obtained by puncturing any one of five non-primary 40 MHz channels in 240 MHz transmission defined as 320 MHz EHT PPDU with 80 MHz punctured. In some embodiments, the RU allocation subfield is set to indicate 2x996+484 tone MRU as follows: B0 is set to 1 if the punctured non-primary 40 MHz channel is a part of the lowest frequency 80 MHz channel of any 160 MHz channel; and set to 0 if the punctured non-primary 40 MHz channel is a part of the second lowest frequency 80 MHz channel of any 160 MHz channel. The values of the first bit B0 and the remaining bits B1 to B7 are examples, and the disclosure is not limited to this. In some embodiments, the first bit B0 can be 0 or 1. In some embodiments, B1 to B7 (B1, B2, B3, B4, B5, B6, and B7) have different values from the above example values and the values of B1 to B7 are equal to or greater than 90 and equal to or less than 255.

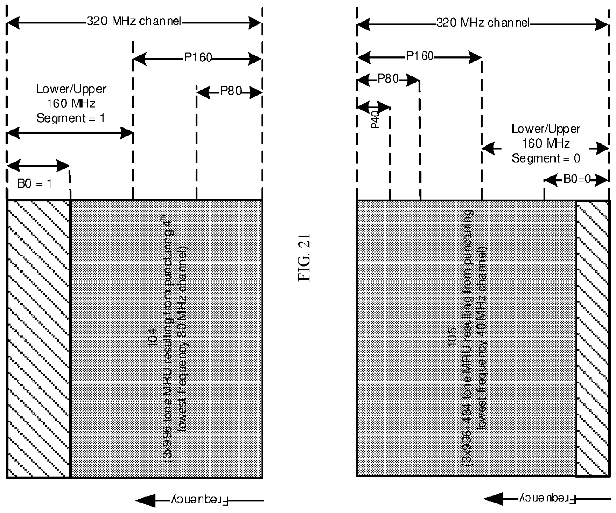

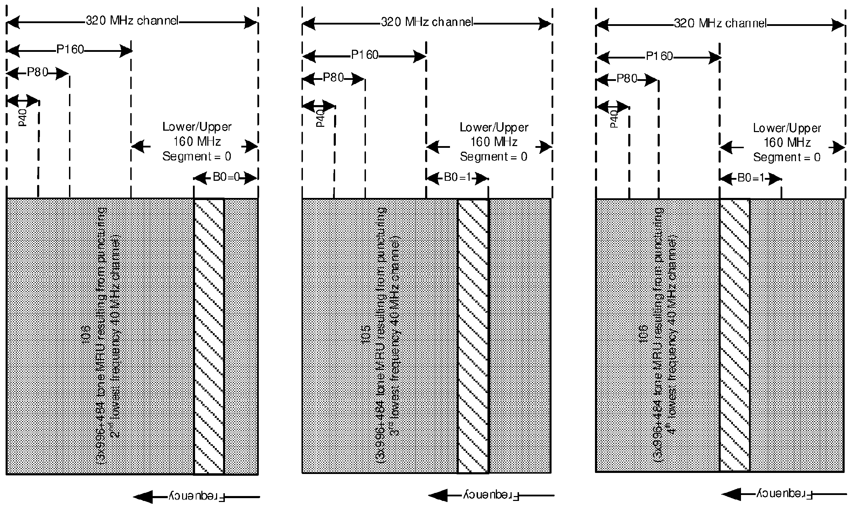

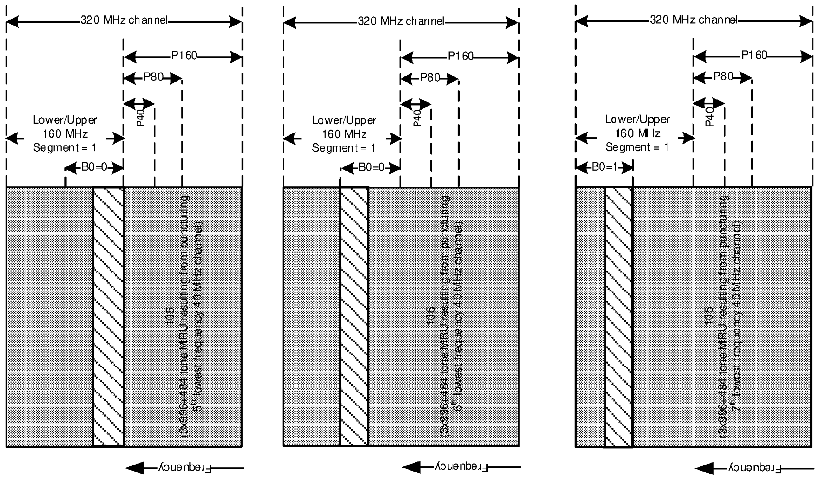

FIG. 21 illustrates settings for an RU allocation subfield and a lower/upper 160 MHz segment subfield in a MU-RTS trigger frame for indicating one 3x996 tone MRU according to an embodiment of the present disclosure. FIG. 21 illustrates that, in some embodiments, the RU allocation subfield is set to indicate 3x996 tone MRU as follows: B0 of the RU Allocation subfield is set to 0 if the punctured non-primary 80 MHz channel is the lowest frequency 80 MHz channel of any 160 MHz channel; and set to 1 if the punctured non-primary 80 MHz channel is the second lowest frequency 80 MHz channel of any 160 MHz channel. B7-B1 are set to 104. In some embodiments, the RU allocation subfield is set to indicate 3x996 tone MRU as follows: B0 of the RU Allocation subfield is set to 1 if the punctured non-primary 80 MHz channel is the lowest frequency 80 MHz channel of any 160 MHz channel; and set to 0 if the punctured non-primary 80 MHz channel is the second lowest frequency 80 MHz channel of any 160 MHz channel. The values of the first bit B0 and the remaining bits B1 to B7 are examples, and the disclosure is not limited to this. In some embodiments, the first bit B0 can be 0 or 1. In some embodiments, B1 to B7 (B1, B2, B3, B4, B5, B6, and B7) have different values from the above example values and the values of B1 to B7 are equal to or greater than 90 and equal to or less than 255.

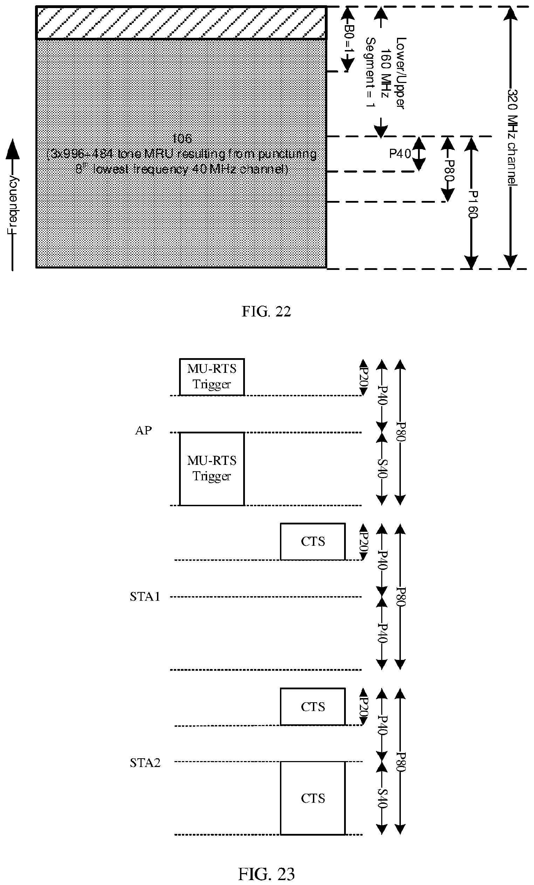

FIG. 22 illustrates settings for an RU allocation subfield and a lower/upper 160 MHz segment subfield in a MU-RTS trigger frame for indicating one 3x996+484 tone MRU according to an embodiment of the present disclosure. FIG. 22 illustrates that, in some embodiments, the RU allocation subfield is set to indicate 3x996+484 tone MRU as follows: B0 is set to 0 if the punctured non-primary 40 MHz channel is a part of the lowest frequency 80 MHz channel of any 160 MHz channel; and set to 1 if the punctured non-primary 40 MHz channel is a part of the second lowest frequency 80 MHz channel of any 160 MHz channel. B7-B1 are set to 105 if the punctured non-primary 40 MHz channel is the lowest frequency 40 MHz channel of any 80 MHz channel of the 320 MHz channel. B7-B1 are set to 106 if the punctured non-primary 40 MHz channel is the second lowest frequency 40 MHz channel of any 80 MHz channel of the 320 MHz channel. In some embodiments, the RU allocation subfield is set to indicate 3x996+484 tone MRU as follows: B0 is set to 1 if the punctured non-primary 40 MHz channel is a part of the lowest frequency 80 MHz channel of any 160 MHz channel; and set to 0 if the punctured non-primary 40 MHz channel is a part of the second lowest frequency 80 MHz channel of any 160 MHz channel. The values of the first bit B0 and the remaining bits B1 to B7 are examples, and the disclosure is not limited to this. In some embodiments, the first bit B0 can be 0 or 1. In some embodiments, B1 to B7 (B1, B2, B3, B4, B5, B6, and B7) have different values from the above example values and the values of B1 to B7 are equal to or greater than 90 and equal to or less than 255.

FIG. 23 is a schematic diagram illustrating another example of a MU-RTS trigger frame soliciting CTS frame responses on P80 according to an embodiment of the present disclosure. FIG. 23 illustrates that, in some embodiments, a MU-RTS trigger frame is transmitted in a non-HT duplicate PPDU on the 484+242 tone MRU comprising the P20 and secondary 40 MHz channel (S40) where the P20 is the fourth lowest frequency 20 MHz channel in the P80. Further, in the user information field addressed to STA1, the lower/upper 160 MHz segment subfield is set to 0; and B0 and B7-B1 of the RU allocation subfield are set to 0 and 64, respectively. In the user information field addressed to STA2, the lower/upper 160 MHz Segment subfield is set to 0; and B0 and B7-B1 of RU allocation subfield are set to 0 and 92 respectively. In other words, the MU-RTS trigger frame requests STA1 to transmit a CTS frame response in a non-HT PPDU on the P20 and STA2 to transmit a CTS frame response in a non-HT duplicate on the 484+242 tone MRU comprising the P20 and S40. As a result, TXOP overprotection can be avoided when the transmissions following the MU-RTS trigger/CTS frame exchange occupy the 484+242 tone MRU comprising the P20 and S40.

### Embodiment

According to yet another embodiment, the settings of a RU allocation subfield and a lower/upper 160 MHz segment subfield in a MU-RTS trigger frame are the same as illustrated in FIG. 9. In other words, the RU allocation subfield and the lower/upper 160 MHz segment subfield of a user information field for a STA indicate whether a CTS frame response is to be sent by the STA on a P20, a P40, a P80, a P160, or 320 MHz channel. However, how a STA sends its CTS frame response depends on not only the RU allocation information indicated in the RU allocation subfield and the lower/upper 160 MHz segment subfield of the corresponding user information field in the MU-RTS Trigger frame, but also a channel puncturing pattern indicated in a most recently received information element by the STA. The information element which indicates the channel puncturing pattern may be an EHT Operation element, which may be included in a Management frame such as a Beacon frame, a Probe Response frame, an Association Response frame, or an Reassociation Response frame.

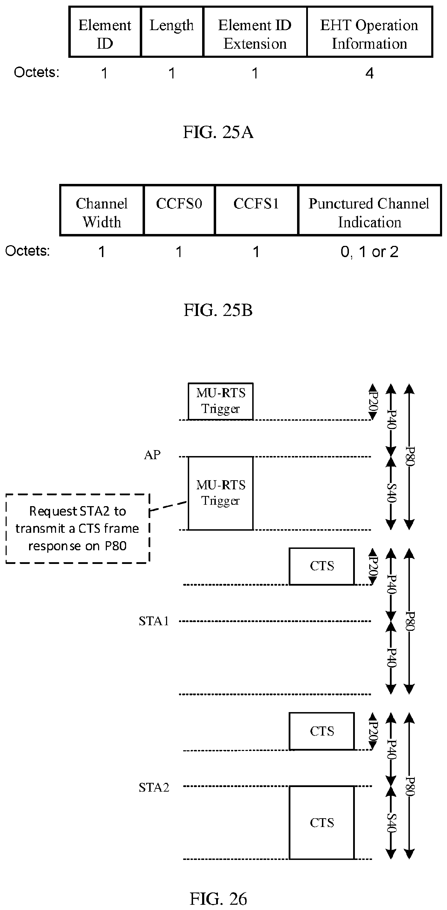

FIG. 25A illustrates a format of an EHT Operation element according to the present disclosure The EHT Operation element may comprise an EHT Operation Information field. FIG. 25B illustrates a format of the EHT Operation Information field of the EHT Operation element according to an embodiment of the present disclosure. The EHT Operation Information field may comprise a Channel Width subfield, a (Channel Center Frequency Segment 0) CCFS0 subfield, a (Channel Center Frequency Segment 1) CCFS1 subfield, and a Punctured Channel Indication subfield. The Channel Width subfield indicates the EHT BSS (basic service set) bandwidth, which is 20 MHz, 40 MHz, 80 MHz, 160 MHz, or 320 MHz. For a 20 MHz, 40 MHz, or 80 MHz BSS bandwidth, the CCFS0 subfield indicates the channel center frequency index for the 20 MHz, 40 MHz, or 80 MHz channel on which the EHT BSS operates. For a 160 MHz BSS bandwidth, the CCFS0 subfield indicates the channel center frequency index of the 80 MHz channel segment that contains the primary channel; and the CCFS 1 subfield indicates the channel center frequency index of the 160 MHz channel on which the EHT BSS operates. For a 320 MHz BSS bandwidth, the CCFS0 subfield indicates the channel center frequency index of the 160 MHz channel segment that contains the primary channel; and the CCFS1 subfield indicates the channel center frequency index of the 320 MHz channel on which the EHT BSS operates.

The Punctured Channel Indication subfield indicates a channel puncturing pattern; and the size of the Punctured Channel Indication subfield depends on the setting of the Channel Width subfield. If the Channel Width subfield is set to indicate 20 MHz or 40 MHz EHT BSS bandwidth, the Punctured Channel Indication subfield is not present in the EHT Operation Information field. If the Channel Width subfield is set to indicate 80 MHz or 160 MHz EHT BSS bandwidth, the Punctured Channel Indication subfield comprises an 8-bit bitmap. The 8-bit bitmap tells which 20 MHz channel is punctured in the 80 MHz or 160 MHz BSS operating channel, where B0 applies to the lowest frequency 20 MHz channel and B7 to the highest frequency 20 MHz channel. For each of the bits B0-B7, a value of 0 indicates that the corresponding 20 MHz channel is punctured, and a value of 1 is used otherwise. In terms of 80 MHz EHT BSS bandwidth, each of the bits B4-B7 is reserved or set to 0. If the Channel Width subfield is set to indicate 320 MHz EHT BSS bandwidth, the Punctured Channel Indication subfield comprises a 16-bit bitmap. The 16-bit bitmap tells which 20 MHz channel is punctured in the 320 MHz BSS operating channel, where B0 applies to the lowest frequency 20 MHz channel and B 15 to the highest frequency 20 MHz channel. For each of the bits B0-B15, a value of 0 indicates that the corresponding 20 MHz channel is punctured, and a value of 1 is used otherwise.

FIG. 26 illustrates an example of the exchange of MU-RTS trigger frame and simultaneous CTS frame responses on the P80 in a TXOP according to the present disclosure. In this example, a MU-RTS trigger frame is transmitted in a non-HT duplicate PPDU on the 484+242 tone MRU comprising the P20 and S40 where the P20 is the fourth lowest frequency 20 MHz channel in the P80. Further, in the user information field addressed to STA1, the lower/upper 160 MHz segment subfield is set to 0; and a first bit, B0, and the remaining bits, B7-B1, of the RU allocation subfield are set to 0 and 64, respectively; while in the user information field addressed to STA2, the lower/upper 160 MHz segment subfield is set to 0; and B0 and B7-B1 of RU allocation subfield are set to 0 and 67, respectively. In other words, the MU-RTS trigger frame requests STA1 to transmit a CTS frame response in a non-HT PPDU on the P20 which is the fourth lowest frequency 20 MHz channel in the P80 and requests STA2 to transmit a CTS frame response in a non-HT duplicate PPDU on the P80. On the other hand, the most recently received EHT Operation element by STA2 indicates that the third lowest frequency 20 MHz channel in the P80 is punctured. After considering both the RU allocation information in the MU-RTS trigger frame and the channel puncturing pattern in the EHT Operation element, STA2 transmits a CTS frame response in a non-HT duplicate PPDU on the 484+242 tone MRU comprising the P20 and S40. As a result, TXOP overprotection can be avoided when the transmissions following the MU-RTS trigger/CTS frame exchange occupy the 484+242 tone MRU comprising the P20 and S40.

Further, post-EHT WLAN can be the next-generation WLAN immediately after EHT WLAN. According to some embodiments of the present disclosure, HE STAs, EHT STAs, and post-EHT STAs may coexist in a post-EHT BSS. The MU-RTS trigger/CTS frame exchange procedure can be used for TXOP protection in post-EHT WLAN in a similar manner to IEEE 802.11be EHT WLAN.

In summary, the above embodiments propose an access point (AP), a station (STA), and a wireless communication method, which can solve issues in the prior art, improve transmit opportunity (TXOP) protection, provide a MU-RTS trigger/CTS frame exchange procedure for TXOP protection in an efficient manner, achieve extremely high throughput, provide good communication performance, and/or provide high reliability. The MU-RTS Trigger/CTS frame exchange procedure can be used for TXOP protection in IEEE 802.11be EHT WLAN in an efficient manner. In the above embodiments, an AP transmits a MU-RTS trigger frame to a plurality of STAs, which indicates whether the CTS frame response is to be sent by each of the plurality of STAs on the primary 80 MHz channel (P80), primary 160 MHz channel (P160) or 320 MHz channel in which at least one 20 MHz channel is punctured.

Commercial interests for some embodiments are as follows. 1. Solving issues in the prior art. 2. Improving transmit opportunity (TXOP) protection. 3. Providing a MU-RTS trigger/CTS frame exchange procedure for TXOP protection in an efficient manner. 4. Achieving extremely high throughput (EHT). 5. Providing a good communication performance. 6. Providing a high reliability. 7. Some embodiments of the present disclosure are used by chipset vendors, communication system development vendors, automakers including cars, trains, trucks, buses, bicycles, moto-bikes, helmets, and etc., drones (unmanned aerial vehicles), smartphone makers, communication devices for public safety use, AR/VR device maker for example gaming, conference/seminar, education purposes. Some embodiments of the present disclosure are a combination of "techniques/processes" that can be adopted in communication specification and/ or communication standards such as IEEE specification and/or to standards create an end product. Some embodiments of the present disclosure propose technical mechanisms.

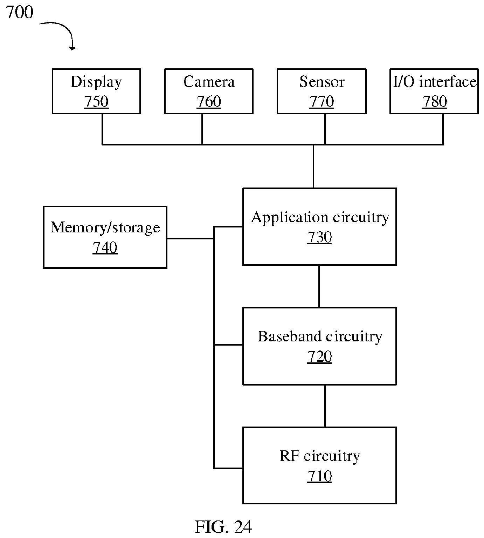

FIG. 24 is a block diagram of an example system 700 for wireless communication according to the present disclosure. Embodiments described herein may be implemented into the system using any suitably configured hardware and/or software. FIG. 24 illustrates the system 700 including a radio frequency (RF) circuitry 710, a baseband circuitry 720, an application circuitry 730, a memory/storage 740, a display 750, a camera 760, a sensor 770, and an input/output (I/O) interface 780, coupled with each other at least as illustrated. The application circuitry 730 may include a circuitry such as, but not limited to, one or more single-core or multi-core processors. The processors may include any combination of general-purpose processors and dedicated processors, such as graphics processors, application processors. The processors may be coupled with the memory/storage and configured to execute instructions stored in the memory/storage to enable various applications and/or operating systems running on the system.

The baseband circuitry 720 may include circuitry such as, but not limited to, one or more single-core or multi-core processors. The processors may include a baseband processor. The baseband circuitry may handle various radio control functions that enables communication with one or more radio networks via the RF circuitry. The radio control functions may include, but are not limited to, signal modulation, encoding, decoding, radio frequency shifting, etc. In some embodiments, the baseband circuitry may provide for communication compatible with one or more radio technologies. For example, in some embodiments, the baseband circuitry may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry is configured to support radio communications of more than one wireless protocol may be referred to as multi-mode baseband circuitry.

In various embodiments, the baseband circuitry 720 may include circuitry to operate with signals that are not strictly considered as being in a baseband frequency. For example, in some embodiments, baseband circuitry may include circuitry to operate with signals having an intermediate frequency, which is between a baseband frequency and a radio frequency. The RF circuitry 710 may enable communication with wireless networks using modulated electromagnetic radiation through a non-solid medium. In various embodiments, the RF circuitry may include switches, filters, amplifiers, etc. to facilitate the communication with the wireless network. In various embodiments, the RF circuitry 710 may include circuitry to operate with signals that are not strictly considered as being in a radio frequency. For example, in some embodiments, RF circuitry may include circuitry to operate with signals having an intermediate frequency, which is between a baseband frequency and a radio frequency.

In various embodiments, the transmitter circuitry, control circuitry, or receiver circuitry discussed above with respect to the AP or STA may be embodied in whole or in part in one or more of the RF circuitry, the baseband circuitry, and/or the application circuitry. As used herein, "circuitry" may refer to, be part of, or include an Application Specific Integrated Circuit (ASIC), an electronic circuit, a processor (shared, dedicated, or group), and/or a memory (shared, dedicated, or group) that execute one or more software or firmware programs, a combinational logic circuit, and/or other suitable hardware components that provide the described functionality. In some embodiments, the electronic device circuitry may be implemented in, or functions associated with the circuitry may be implemented by, one or more software or firmware modules. In some embodiments, some or all of the constituent components of the baseband circuitry, the application circuitry, and/or the memory/storage may be implemented together on a system on a chip (SOC). The memory/storage 740 may be used to load and store data and/or instructions, for example, for system. The memory/storage for one embodiment may include any combination of suitable volatile memory, such as dynamic random access memory (DRAM)), and/or non-volatile memory, such as flash memory.

In various embodiments, the I/O interface 780 may include one or more user interfaces designed to enable user interaction with the system and/or peripheral component interfaces designed to enable peripheral component interaction with the system. User interfaces may include, but are not limited to a physical keyboard or keypad, a touchpad, a speaker, a microphone, etc. Peripheral component interfaces may include, but are not limited to, a non-volatile memory port, a universal serial bus (USB) port, an audio jack, and a power supply interface. In various embodiments, the sensor 770 may include one or more sensing devices to determine environmental conditions and/or location information related to the system. In some embodiments, the sensors may include, but are not limited to, a gyro sensor, an accelerometer, a proximity sensor, an ambient light sensor, and a positioning unit. The positioning unit may also be part of, or interact with, the baseband circuitry and/or RF circuitry to communicate with components of a positioning network, e.g., a global positioning system (GPS) satellite.

In various embodiments, the display 750 may include a display, such as a liquid crystal display and a touch screen display. In various embodiments, the system 700 may be a mobile computing device such as, but not limited to, a laptop computing device, a tablet computing device, a netbook, an ultrabook, a smartphone, an AR/VR glasses, etc. In various embodiments, system may have more or less components, and/or different architectures. Where appropriate, methods described herein may be implemented as a computer program. The computer program may be stored on a storage medium, such as a non-transitory storage medium.

A person having ordinary skill in the art understands that each of the units, algorithm, and steps described and disclosed in the embodiments of the present disclosure are realized using electronic hardware or combinations of software for computers and electronic hardware. Whether the functions run in hardware or software depends on the condition of application and design requirement for a technical plan. A person having ordinary skill in the art can use different ways to realize the function for each specific application while such realizations should not go beyond the scope of the present disclosure. It is understood by a person having ordinary skill in the art that he/she can refer to the working processes of the system, device, and unit in the above-mentioned embodiment since the working processes of the above-mentioned system, device, and unit are basically the same. For easy description and simplicity, these working processes will not be detailed.

It is understood that the disclosed system, device, and method in the embodiments of the present disclosure can be realized with other ways. The above-mentioned embodiments are exemplary only. The division of the units is merely based on logical functions while other divisions exist in realization. It is possible that a plurality of units or components are combined or integrated in another system. It is also possible that some characteristics are omitted or skipped. On the other hand, the displayed or discussed mutual coupling, direct coupling, or communicative coupling operate through some ports, devices, or units whether indirectly or communicatively by ways of electrical, mechanical, or other kinds of forms. The units as separating components for explanation are or are not physically separated. The units for display are or are not physical units, that is, located in one place or distributed on a plurality of network units. Some or all of the units are used according to the purposes of the embodiments. Moreover, each of the functional units in each of the embodiments can be integrated in one processing unit, physically independent, or integrated in one processing unit with two or more than two units.

If the software function unit is realized and used and sold as a product, it can be stored in a readable storage medium in a computer. Based on this understanding, the technical plan proposed by the present disclosure can be essentially or partially realized as the form of a software product. Or, one part of the technical plan beneficial to the conventional technology can be realized as the form of a software product. The software product in the computer is stored in a storage medium, including a plurality of commands for a computational device (such as a personal computer, a server, or a network device) to run all or some of the steps disclosed by the embodiments of the present disclosure. The storage medium includes a USB disk, a mobile hard disk, a read-only memory (ROM), a random access memory (RAM), a floppy disk, or other kinds of media capable of storing program codes.

## Claims

1. A wireless communication method, comprising:
transmitting (802), by an access point, AP, a multi-user ready-to-send, MU-RTS, trigger frame to a plurality of stations, STAs, wherein the MU-RTS trigger frame indicates whether a clear-to-send, CTS, frame response is to be transmitted by each of the plurality of STAs on a primary 20 MHz channel, P20, a primary 40 MHz channel, P40, a primary 80 MHz channel, P80, a primary 160 MHz channel, P160, or a 320 MHz channel, and at least one 20 MHz channel is punctured in the P80, the P160, or the 320 MHz channel,
wherein each user information field of the MU-RTS trigger frame comprises a subfield and an RU allocation subfield, and the subfield and the RU allocation subfield of each user information field in the MU-RTS trigger frame indicate RU allocation information, and
wherein the subfield of each user information field in the MU-RTS trigger frame comprises a lower/upper 160 MHz segment subfield.

2. The wireless communication method of claim 1, wherein the lower/upper 160 MHz segment subfield is set to a first value to indicate the P20, the P40, the P80, or the P160; while the lower/upper 160 MHz segment subfield is set to a second value to indicate the 320 MHz channel.

3. The wireless communication method of claim 2, wherein the first value is 0, and the second value is 1.

4. The wireless communication method of claim 1, wherein B0 of the RU allocation subfield is set to 1 and B7-B1 of the RU allocation subfield are set to 69 to indicate the 320 MHz channel.

5. The wireless communication method of claim 1, wherein when a HE/EHT format subfield of the user information field is set to a second value, the RU allocation subfield, together with the lower/upper 160 MHz segment subfield, further indicates whether the CTS frame response is to be sent by the STA indicated by an AID12 subfield on the P80, P160 or 320 MHz channel in which at least one 20 MHz channel is punctured.

6. The wireless communication method of claim 5, wherein the second value is 1.

7. The wireless communication method of claim 5, wherein the P80, P160 or 320 MHz channel in which at least one 20 MHz channel is punctured is one 484+242 tone MRU which results from puncturing any non-primary 20 MHz channel from the P80, one 996+484 tone MRU which results from puncturing any non-primary 40 MHz channel from the P160, one 996+484+242 tone MRU which results from puncturing any non-primary 20 MHz channel from the P160, 2x996+484 tone MRU which results from puncturing any non-primary 40 MHz channel from any consecutive 240 MHz portion of the 320 MHz channel, one 3x996 tone MRU which results from puncturing any non-primary 80 MHz channel from the 320 MHz channel, or one 3x996+484 tone MRU which results from puncturing any non-primary 40 MHz channel from the 320 MHz channel.

8. The wireless communication method of claim 5, wherein the method further comprises:
receiving, by the access point, AP, an CTS frame response, wherein the CTS frame response depends on the RU allocation information indicated in the RU allocation subfield, the lower/upper 160 MHz segment subfield of a corresponding user information field in the MU-RTS trigger frame and a channel puncturing pattern indicated in a most recently received information element by the STA.

9. The wireless communication method of claim 8, wherein the information element which indicates the channel puncturing pattern is an EHT Operation element and the EHT Operation element comprises an EHT Operation Information field.

10. The wireless communication method of claim 9, wherein the EHT Operation Information field comprises a Channel Width subfield, a Channel Center Frequency Segment 0, CCFS0, subfield, a Channel Center Frequency Segment 1, CCFS1, subfield, and a Punctured Channel Indication subfield.

11. The wireless communication method of claim 1, wherein in the user information field addressed to STA2, the lower/upper 160 MHz segment subfield is set to 0, and B0 and B7-B1 of the RU allocation subfield are set to 0 and 67, respectively.

12. The wireless communication method of claim 11, wherein an EHT Operation element received by STA2 indicates that the third lowest frequency 20 MHz channel in the P80 is punctured; and
the method further comprises:
receiving, by the access point, AP, a CTS frame response from STA2 in a non-HT duplicate PPDU on a 484+242 tone MRU comprising the P20 and S40.

13. The wireless communication method of any one of claims 1 to 12, wherein the MU-RTS trigger frame comprises a HE/EHT format subfield of a user information field to indicate a HE/EHT subfield.

14. The wireless communication method of any one of claims 1 to 12, wherein when a HE/EHT format subfield of a user information field is set to a second value, an RU allocation subfield, together with a lower/upper 160 MHz segment subfield, indicates how the CTS frame response is to be sent by the STA.

15. An access point, AP (10), comprising:
a memory (12);
a transceiver (13); and
a processor (11) coupled to the memory (12) and the transceiver (13);
wherein the processor (11) is configured to perform the wireless communication method according to any one of claims 1-14.

## Patentansprüche

1. Drahtloskommunikationsverfahren, das Folgendes umfasst:
Senden (802) durch einen Zugangspunkt, AP, eines Mehranwendersendebereitschafts-Auslöserahmens, MU-RTS-Auslöserahmen, zu mehreren Stationen, STAs, wobei der MU-RTS-Auslöserahmen angibt, ob eine Sendefreigabe-Rahmenantwort, CTS-Rahmenantwort, durch jede der mehreren STAs in einem Haupt-20 MHz-Kanal, P20, einem Haupt-40 MHz-Kanal, P40, einem Haupt-80 MHz-Kanal, P80, einem Haupt-160 MHz-Kanal, P160, oder einem 320 MHz-Kanal gesendet werden soll und mindestens ein 20 MHz-Kanal in dem P80, dem P160 oder dem 320 MHz-Kanal durchgestochen ist,
wobei jedes Anwenderinformationsfeld des MU-RTS-Auslöserahmens ein Unterfeld und ein RU-Zuweisungsunterfeld umfasst und das Unterfeld und das RU-Zuweisungsunterfeld jedes Anwenderinformationsfelds im MU-RTS-Auslöserahmen RU-Zuweisungsinformationen angeben und
das Unterfeld jedes Anwenderinformationsfelds im MU-RTS-Auslöserahmen ein unteres/oberes 160 MHz-Segmentunterfeld umfasst.

2. Drahtloskommunikationsverfahren nach Anspruch 1, wobei das untere/obere 160 MHz-Segmentunterfeld auf einen ersten Wert gesetzt wird, um den P20, den P40, den P80 oder den P160 anzugeben; während das untere/obere 160 MHz-Segmentunterfeld auf einen zweiten Wert gesetzt wird, um den 320 MHz-Kanal anzugeben.

3. Drahtloskommunikationsverfahren nach Anspruch 2, wobei der erste Wert 0 ist und der zweite Wert 1 ist.

4. Drahtloskommunikationsverfahren nach Anspruch 1, wobei B0 des RU-Zuweisungsunterfelds auf 1 gesetzt wird und B7-B1 des RU-Zuweisungsunterfelds auf 69 gesetzt werden, um den 320 MHz-Kanal anzugeben.

5. Drahtloskommunikationsverfahren nach Anspruch 1, wobei dann, wenn ein HE/EHT-Formatunterfeld des Anwenderinformationsfelds auf einen zweiten Wert gesetzt ist, das RU-Zuweisungsunterfeld zusammen mit dem unteren/oberen 160 MHz-Segmentunterfeld ferner angibt, ob die CTS-Rahmenantwort durch die STA, die durch ein AID12-Unterfeld angegeben ist, in dem P80, dem P160 oder dem 320 MHz-Kanal, in dem mindestens ein 20 MHz-Kanal durchgestochen ist, gesendet werden soll.

6. Drahtloskommunikationsverfahren nach Anspruch 5, wobei der zweite Wert 1 ist.

7. Drahtloskommunikationsverfahren nach Anspruch 5, wobei der P80, der P160 oder der 320 MHz-Kanal, in dem mindestens ein 20 MHz-Kanal durchgestochen ist, eine 484 + 242-Ton-MRU, die aus einem Durchstechen eines beliebigen nicht primären 20 MHz-Kanals aus dem P80 resultiert, eine 996 + 484-Ton-MRU, die aus einem Durchstechen eines beliebigen nicht primären 40 MHz-Kanals aus dem P160 resultiert, eine 996 + 484 + 242-Ton-MRU, die aus einem Durchstechen eines beliebigen nicht primären 20 MHz-Kanals aus dem P160 resultiert, eine 2 × 996 + 484-Ton-MRU, die aus einem Durchstechen eines beliebigen nicht primären 40 MHz-Kanals aus einem beliebigen fortlaufenden 240 MHz Abschnitt des 320 MHz-Kanals resultiert, eine 3 × 996-Ton-MRU, die aus einem Durchstechen eines beliebigen nicht primären 80 MHz-Kanals aus dem 320 MHz-Kanal resultiert, oder eine 3 × 996 + 484-Ton-MRU, die aus einem Durchstechen eines beliebigen nicht primären 40 MHz-Kanals aus dem 320 MHz-Kanal resultiert, ist.

8. Drahtloskommunikationsverfahren nach Anspruch 5, wobei das Verfahren ferner Folgendes umfasst:
Empfangen durch den Zugangspunkt, AP, einer CTS-Rahmenantwort, wobei die CTS-Rahmenantwort von den RU-Zuweisungsinformationen, die im RU-Zuweisungsunterfeld angegeben sind, dem unteren/oberen 160 MHz-Segmentunterfeld eines entsprechenden Anwenderinformationsfelds im MU-RTS-Auslöserahmen und einem Kanaldurchstechmuster, das in einem durch die STA zuletzt empfangenen Informationselement angegeben ist, abhängt.

9. Drahtloskommunikationsverfahren nach Anspruch 8, wobei das Informationselement, das das Kanaldurchstechmuster angibt, ein EHT-Operationselement ist und das EHT-Operationselement ein EHT-Operationsinformationsfeld umfasst.

10. Drahtloskommunikationsverfahren nach Anspruch 9, wobei das EHT-Operationsinformationsfeld ein Kanalbreitenunterfeld, ein Unterfeld eines Kanalmittenfrequenzsegments 0, CCFSO-Unterfeld, ein Unterfeld eines Kanalmittenfrequenzsegments 1, CCFS1-Unterfeld, und ein Unterfeld zur Angabe durchgestochener Kanäle umfasst.

11. Drahtloskommunikationsverfahren nach Anspruch 1, wobei in dem Anwenderinformationsfeld, das zur STA2 adressiert ist, das untere/obere 160 MHz-Segmentunterfeld zu 0 gesetzt ist und B0 und B7-B1 des RU-Zuweisungsunterfelds zu 0 bzw. 67 gesetzt sind.

12. Drahtloskommunikationsverfahren nach Anspruch 11, wobei ein EHT-Operationselement, das durch die STA2 empfangen wurde, angibt, dass der 20 MHz-Kanal mit der drittniedrigsten Frequenz im P80 durchgestochen ist; und
das Verfahren ferner Folgendes umfasst:
Empfangen durch den Zugangspunkt, AP, einer CTS-Rahmenantwort von der STA2 in einer Nicht-HT-Duplikat-PPDU in einer 484 + 242-Ton-MRU, die den P20 und den S40 umfasst.

13. Drahtloskommunikationsverfahren nach einem der Ansprüche 1 bis 12, wobei der MU-RTS-Auslöserahmen ein HE/EHT-Formatunterfeld eines Anwenderinformationsfelds umfasst, um ein HE/EHT-Unterfeld anzugeben.

14. Drahtloskommunikationsverfahren nach einem der Ansprüche 1 bis 12, wobei dann, wenn ein HE/EHT-Formatunterfeld eines Anwenderinformationsfelds auf einen zweiten Wert gesetzt ist, ein RU-Zuweisungsunterfeld zusammen mit einem unteren/oberen 160 MHz-Segmentunterfeld angibt, wie die CTS-Rahmenantwort durch die STA gesendet werden soll.

15. Zugangspunkt, AP (10), der Folgendes umfasst:
einen Speicher (12);
eine Sende-/Empfangsvorrichtung (13) und
einen Prozessor (11), der an den Speicher (12) und die Sende-/Empfangsvorrichtung (13) gekoppelt ist;
wobei der Prozessor (11) konfiguriert ist, das Drahtloskommunikationsverfahren nach einem der Ansprüche 1-14 durchzuführen.

## Revendications

1. Procédé de communication sans fil, comprenant :
la transmission (802), par un point d'accès, « Access Point » AP, d'une trame de déclenchement multi-utilisateur prête à envoyer, « Multi-User Ready-To-Send MU-RTS, à une pluralité de stations, STAs, dans lequel la trame de déclenchement MU-RTS indique le fait qu'une réponse de trame autorisée à envoyer, « Clear-To-Send » CTS, doit ou non être transmise par chacune de la pluralité de STAs sur un canal primaire de 20 MHz, P20, un canal primaire de 40 MHz, P40, un canal primaire de 80 MHz, P80, un canal primaire de 160 MHz, P160, ou un canal de 320 MHz, et au moins un canal de 20 MHz est perforé dans le P80, le P160, ou le canal de 320 MHz,
dans lequel chaque champ d'informations utilisateur de la trame de déclenchement MU-RTS comprend un sous-champ et un sous-champ d'attribution de RU, et le sous-champ et le sous-champ d'attribution de RU de chaque champ d'informations utilisateur dans la trame de déclenchement MU-RTS indiquent des informations d'attribution de RU, et
dans lequel le sous-champ de chaque champ d'informations utilisateur dans la trame de déclenchement MU-RTS comprend un sous-champ de segment de 160 MHz supérieur/inférieur.

2. Procédé de communication sans fil de la revendication 1, dans lequel le sous-champ de segment de 160 MHz supérieur/inférieur est réglé à une première valeur pour indiquer le P20, le P40, le P80, ou le P160 ; alors que le sous-champ de segment de 160 MHz supérieur/inférieur est réglé à une seconde valeur pour indiquer le canal de 320 MHz.

3. Procédé de communication sans fil de la revendication 2, dans lequel la première valeur est 0, et la seconde valeur est 1.

4. Procédé de communication sans fil de la revendication 1, dans lequel B0 du sous-champ d'attribution de RU est réglé à 1 et B7-B1 du sous-champ d'attribution de RU sont réglés à 69 pour indiquer le canal de 320 MHz.

5. Procédé de communication sans fil de la revendication 1, dans lequel, lorsqu'un sous-champ de format HE/EHT du champ d'informations utilisateur est réglé à une seconde valeur, le sous-champ d'attribution de RU, conjointement avec le sous-champ de segment de 160 MHz supérieur/inférieur, indique en outre le fait que la réponse de trame CTS doit ou non être envoyée par la STA indiquée par un sous-champ AID12 sur le P80, P160, ou canal de 320 MHz dans lequel au moins un canal de 20 MHz est perforé.

6. Procédé de communication sans fil de la revendication 5, dans lequel la seconde valeur est de 1.

7. Procédé de communication sans fil de la revendication 5, dans lequel le P80, P160, ou canal de 320 MHz dans lequel au moins un canal de 20 MHz est perforé est une MRU de tonalité 484+242 qui résulte de la perforation de tout canal non-primaire de 20 MHz à partir du P80, une MRU de tonalité 996+484 qui résulte de la perforation de tout canal non-primaire de 40 MHz à partir du P160, une MRU de tonalité 996+484+242 qui résulte de la perforation de tout canal non-primaire de 20 MHz à partir du P160, MRU de tonalité 2x996+484 qui résulte de la perforation de tout canal non-primaire de 40 MHz à partir de toute partie de 240 MHz consécutive du canal de 320 MHz, une MRU de tonalité 3x996 qui résulte de la perforation de tout canal non-primaire de 80 MHz à partir du canal de 320 MHz, ou une MRU de tonalité 3x996+484 qui résulte de la perforation de tout canal non-primaire de 40 MHz à partir du canal de 320 MHz.

8. Procédé de communication sans fil de la revendication 5, dans lequel le procédé comprend en outre :
la réception, par le point d'accès, AP, d'une réponse de trame CTS, dans lequel la réponse de trame CTS dépend des informations d'attribution de RU indiquées dans le sous-champ d'attribution de RU, le sous-champ de segment de 160 MHz supérieur/inférieur d'un champ d'informations utilisateur correspondant dans la trame de déclenchement MU-RTS, et d'un mode de perforation de canal indiqué dans un élément d'informations reçu le plus récemment par la STA.

9. Procédé de communication sans fil de la revendication 8, dans lequel l'élément d'informations qui indique le mode de perforation de canal est un élément d'opération EHT et l'élément d'opération EHT comprend un champ d'informations d'opération EHT.

10. Procédé de communication sans fil de la revendication 9, dans lequel le champ d'informations d'opération EHT comprend un sous-champ de largeur de canal, un sous-champ de segment de fréquence centrale de canal 0, « Channel Center Frequency Segment 0 » CCFS0, un sous-champ de segment de fréquence centrale de canal 1, « Channel Center Frequency Segment 1 » CCFS1, et un sous-champ d'indication de canal perforé.

11. Procédé de communication sans fil de la revendication 1, dans lequel, dans le champ d'informations utilisateur adressé à STA2, le sous-champ de segment de 160 MHz supérieur/inférieur est réglé à 0, et B0 et B7-B1 du sous-champ d'attribution de RU sont réglés à 0 et 67, respectivement.

12. Procédé de communication sans fil de la revendication 11, dans lequel un élément d'opération EHT reçu par STA2 indique que le canal de 20 MHz de troisième de fréquence la plus basse dans le P80 est perforé ; et
le procédé comprend en outre :
la réception, par le point d'accès, AP, d'une réponse de trame CTS en provenance de STA2 dans une PPDU dupliquée non-HT sur une MRU de tonalité 484+242 comprenant le P20 et S40.

13. Procédé de communication sans fil de l'une quelconque des revendications 1 à 12, dans lequel la trame de déclenchement MU-RTS comprend un sous-champ de format HE/EHT d'un champ d'informations utilisateur pour indiquer un sous-champ HE/EHT.

14. Procédé de communication sans fil de l'une quelconque des revendications 1 à 12, dans lequel lorsqu'un sous-champ de format HE/EHT d'un champ d'informations utilisateur est réglé à une seconde valeur, un sous-champ d'attribution de RU, conjointement avec un sous-champ de segment de 160 MHz supérieur/inférieur, indique la manière dont la réponse de trame CTS doit être envoyée par la STA.

15. Point d'accès, « Access Point » AP, (10), comprenant :
une mémoire (12) ;
un émetteur-récepteur (13) ; et
un processeur (11) couplé à la mémoire (12) et à l'émetteur-récepteur (13) ;
dans lequel le processeur (11) est configuré pour réaliser le procédé de communication sans fil selon l'une quelconque des revendications 1 à 14.
